# EUROPEAN PATENT SPECIFICATION

(11) **EP 3 173 951 B1**
(45) Date of publication and mention of the grant of the patent: **01.07.2020**
(21) Application number: 16198844.9
(22) Date of filing: 15.11.2016
(51) Int. Cl.: G06F 16/25

(54) **INTEGRATED FRAMEWORK FOR SECURED DATA PROVISIONING AND MANAGEMENT**
INTEGRIERTER RAHMEN ZUR GESICHERTEN BEREITSTELLUNG UND VERWALTUNG VON DATEN
INFRASTRUCTURE INTÉGRÉE POUR FOURNITURE ET GESTION DE DONNÉES SÉCURISÉES

(30) Priority: 26.11.2015 US 201514953003
(43) Date of publication of application: 31.05.2017
(73) Proprietor: SAP SE, 69190 Walldorf (DE)
(72) Inventor: SUNDARAM, P. Meenakshi, 69190 Walldorf (DE)
(74) Representative: Richardt Patentanwälte PartG mbB

(56) References cited:
- US-A- 5 737 592
- Guy Harris: "Paging", , 24 November 2015 (2015-11-24), XP055480147, Retrieved from the Internet: URL:https://en.wikipedia.org/w/index.php?t itle=Paging&oldid=692161759 [retrieved on 2018-05-31]

## Description

### Field of the invention

The invention relates to data security in database systems.

### Background and related art

Enterprise data may be scattered when accessed by different systems and applications in an enterprise. Such systems and applications may be deployed on different platforms that may result in fragmented infrastructure. An end user may experience latency and inconsistency when such data is consumed via fragmented infrastructure. Fragmented infrastructure may also add overheads of integrating systems and applications that may result in undesirable user experiences, limited personalization of content, inefficient user management and access control rights, inefficient content management techniques, etc. Therefore, providing an infrastructure that facilitates provisioning data that enhances and improves the overall experience of the user when consuming the enterprise data may be challenging.

US5737592A (NGUYEN TAM MINH [US] ET AL) 7 April 1998 (1998-04-07) discloses a similar infrastructure comprising a second computer system connected over a network to a first computer system hosting databases and servicing queries issued by the second computer system.

### Summary

The invention provides for a communication system, a computer-readable storage medium, and a communication method in the independent claims. Embodiments are given in the dependent claims.

Embodiments may provide for an improved means of refreshing data provided by multiple database systems to an application program while also providing for increased data security. For example, a application program running on a second computer system may query a database transactional system running on a first computer system. In embodiments the results of the database query are not directly returned to the first computer system. Instead the results of the database query are transformed into initial pages or blocks of memory that are then transferred from the first computer system to the second computer system via a network connection. When the initial pages of memory are received by the second computer system they are swapped into the second computer system's volatile memory. Volatile memory, i.e. RAM, is memory that is erased when power is no longer provided to a computer system. The initial pages of memory are swapped into the second computer's volatile memory using for example standard memory swapping functionality of the processor of the second computer system.

Using a process like this has several potential advantages. First the data provided to the second computer system is not stored on the second computer system's hard drive. To steal the data, the volatile memory needs to be accessed. Additionally this provides for an effective means of refreshing the data when the databases used to provide the query results change. When the database transactional system detects relevant changes to the databases it can retrieve updated data and construct replacement data in the form of replacement pages or block of data. The first computer system can simply push this replacement data across the network connection and when the second computer system receives it the pages of replacement data are swapped into memory to replace memory pages that need to be updated. This can be used to ensure that the data used by an application is up to date while protecting it by only keeping it in volatile memory.

In one aspect the invention provides for a communication system comprising a first computer system with a first processor. References to processors herein are implied to mean one or more processors or cores. The first computer system comprises a first volatile memory. A volatile memory as used herein encompasses a memory which loses its contents once power is no longer applied to the memory. For example the volatile memory may refer to RAM or so called main memory. The computer systems as described herein may also contain computer storage which is implied to mean memory accessible to a processor that retains its contents once power is no longer applied. For example computer storage could include such things as hard drives, tapes or other storage means which are non-volatile. The first computer system comprises first machine-executable instructions configured for implementing a real-time database transactional system. A real-time database transactional system as used herein encompasses a system which is able to provide access to one or more database systems to a client or other user application. The real-time database transactional system is further configured for connecting to two or more database systems.

The communication system further comprises a second computer system with a second processor. The second computer system comprises a second volatile memory. The second computer system comprises second machine-executable instructions for execution by the second processor to implement an application.

The communication system further comprises a network connection between the second computer system and the first computer system. The network connection could for example be any means which is used to exchange messages between two computer systems. For example an internet, LAN, Bluetooth, or other wireless connection could be used. Execution of the second machine-executable instructions cause the second processor to generate a data request for application data for an instance of the application and to send the data request to the first computer system via the network connection. The data request could for example be an SQL query, another type of database query, or other data which may be used to generate a database request.

Execution of the first machine-executable instructions causes the first processor to generate an initial database query using the data request. There may be a program or computer instructions which detail how the two or more database systems store their data and in what form requests for the various systems need to be. This information can be used to map the data request into the initial database query. Execution of the first machine-executable instructions further cause the first processor to query the two or more database systems using the initial database query. In some examples the two or more database systems may be part of the first computer system. In other examples the two or more database systems may be located remotely and various network connections may be used to query the two or more database systems.

Execution of the first machine-executable instructions further cause the first processor to receive an initial query response from the two or more database systems in response to the database query. The initial query response may for example be comprised of individual responses from the two or more database systems. The two or more database systems may respond asynchronously to the first computer system. Execution of the first machine-executable instructions further cause the first processor to transform the initial query response into the application data using a memory model. Wherein the memory model is configured for formatting the application data as one or more initial pages of memory. A page of memory as used herein encompasses a block of memory of a predetermined size. The memory model may for instance contain a method for mapping the initial query response into a form which the application can use. Instead of providing the initial query response or transformation of the initial query response directly to the second computer system the initial query response is transformed directly into the application data and it is used directly by the second processor without any modifications.

Execution of the first machine-executable instructions further cause the first processor to push the application data across the network connection to the second processor. The application data is pushed across a network connection as the one or more initial pages of memory. Execution of the second machine-executable instructions causes the second processor to swap the one or more initial pages of memory into the second volatile memory upon reception via the network connection. When the second processor receives the one or more initial pages of memory they are not stored in non- volatile memory. They are directly swapped into the second volatile memory. In some examples the one or more initial pages of memory may be formatted as memory blocks which may be used directly by memory swap procedures in the second computer system.

This embodiment may be advantageous because it may provide for a means of directly providing the data from the two or more database systems in a form which provides for enhanced security. The data provided to the first computer system is not stored on a non-volatile memory. For a hacker to access the application data the hacker would have to directly access the volatile memory of the first computer system. Also when the first computer system is turned off the contents of the second volatile memory vanish. Having the application data directly swapped into the second volatile memory may also provide for a means of refreshing the data more efficiently. If contents of the two or more database systems are changed this may provide for a more efficient means of updating the application data.

In another embodiment execution of the first machine-executable instructions further cause the processor to generate memory meta data descriptive of the application data. The memory meta data may for instance be data which describes what data is stored within the one or more initial pages of memory and where they are stored. In some examples the memory model could be provided to both the first computer system and the second computer system and there would be no need for exchange of such memory meta data. However, in other examples this may be beneficial because the results of the query for the two or more database systems may not be known ahead of time. Generating the memory meta data may therefore provide for a more flexible system which can provide application data of different sizes. Execution of the first machine-executable instructions further causes the first processor to push the memory meta data across a network connection to the second processor with the application data. This for example could be performed in different ways. The memory meta data could for example be provided as separate data which is loaded differently into the second volatile memory. In other examples the memory meta data could for example be distributed in one of the one or more initial pages of memory. The application for example could be pre-programmed to look at a particular position in one of the one or more initial pages of memory to search for the memory meta data.

In another embodiment execution of the first machine-executable instructions further cause the processor to delete the application data from the first volatile memory after pushing it across the network connection. This may be beneficial because it may reduce the chance of hackers gaining access to the application data improperly.

In another embodiment the initial database query may be deleted after querying the two or more database systems. This may also provide for greater security. In another embodiment the data request may be deleted from the first volatile memory after generating the initial database query. This may be further beneficial in providing for data security. In another embodiment the data request is stored in the first volatile memory.

In another embodiment the initial database query is stored in the first volatile memory.

In another embodiment the initial query response is cached in the first volatile memory.

In another embodiment the initial query response is deleted from the first volatile memory when the initial query response has been transformed into the application data.

The construction of the application data into the initial query response using the memory model may be beneficial because the application data or updated the application data can be regenerated without storing the initial query response. This reduces the need to store data in the first volatile memory which can possibly be accessed or attacked by hackers.

In another embodiment execution of the first machine-executable instructions further cause the first processor to store query meta data descriptive of the initial database query and/or the initial query response in the first volatile memory. The query meta data could for example contain information which has been retrieved from the two or more databases or data which is relevant to the initial database query. Execution of the first machine-executable instructions further cause the first processor to scan modification journals of the two or more database systems using the meta data to identify modification data descriptive of the initial query response. The two or more database systems may be journaling two or more database systems. A journaling database system is a database system that records changes made to records in the database. The modification journals are data which is descriptive of changes which are made to each of the two or more database systems. By comparing the query meta data to the modification journals of the two or more database systems it can be determined if data which is relevant to the initial database query or the initial query response has changed within any of the two or more database systems. Identifying these changes may be beneficial because it may indicate that the application data needs to be updated.

Execution of the first machine-executable instructions further cause the first processor to generate an updated database query using the modification data. From the scan of the modification journals in comparison to the query meta data it is known that some of the data of the application data should be updated. This knowledge is then used to generate the updated database query to retrieve this data. Execution of the machine-executable instructions further cause the first processor to query the two or more database systems using the updated database query. Execution of the machine-executable instructions further cause the processor to receive an updated query response from the two or more database systems in response to the updated database query. As two or more database systems are responding to the updated query response the data may be retrieved at separate times and cached within the first volatile memory in some cases.

Execution of the first machine-executable instructions further cause the first processor to generate replacement data for replacing at least a portion of the application data using the updated query response using the memory model. The replacement data is generated as one or more replacement pages using the memory model. The one or more replacement pages replace at least one of the one or more initial pages of memory. In this process the application data is replaced entirely or is replaced in blocks the size of the one or more initial pages of memory. Execution of the first machine-executable instructions further cause the processor to push the replacement data across a network connection into the second volatile memory to replace the portion of the application data in the second volatile memory. Execution of the first machine-executable instructions further cause the processor to update the meta data in the first volatile memory using the updated query response and/or the updated database query. The updated query meta data may then be used to scan the modification journals for further changes in the two or more database systems.

Execution of the second machine-executable instructions further cause the second processor to swap the one or more replacement pages into the second volatile memory to replace the at least a portion of the application data. For example the second processor may identify that certain replacement pages have a particular identifier or a code which identifies them as corresponding to the existing one or more replacement pages. These whole pages are then swapped out directly.

This embodiment may be beneficial because it may provide for a means of both keeping the application data fresh or current with the contents of the two or more database systems while at the same time providing for greater security of the data. The application data and the updated application data has been loaded directly into the memory and not stored or cached in a location where it could then be later recovered or attacked by a hacker.

In another embodiment execution of the first machine-executable instructions further causes the processor to delete the replacement data from the first volatile memory after pushing the replacement data across a network connection. This may provide for greater data security.

In another embodiment the replacement data is stored in the first volatile memory before pushing the replacement data across the network connection. The first replacement data is not stored in non-volatile memory.

In another embodiment the query meta data is stored in the first volatile memory.

In another embodiment the updated database query is stored in the first volatile memory.

In another embodiment the updated query response is stored in the first volatile memory.

In another embodiment the replacement data is stored in the first volatile memory.

In another embodiment the updated database query is deleted from the first volatile memory after querying the two or more database systems.

In another embodiment the updated query response is deleted from the first volatile memory after generating the replacement data.

In another embodiment the one or more replacement pages replace the one or more initial pages at least partially.

In another embodiment execution of the first machine-executable instructions further cause the processor to update the memory meta data when generating the replacement data. Execution of the first machine-executable instructions further cause the first processor to push the memory meta data across the network connection to the second processor with the replacement data. As was described before the memory meta data may be pushed separately or it may also be contained within one of the pages of the replacement data.

In another embodiment the memory meta data is deleted after it has been pushed across the network connection.

In another embodiment communication across the network connection is encrypted.

In another embodiment execution of the first machine-executable instructions further cause the processor to dynamically generate a certificate permission for each of the two or more database systems. The first processor queries the two or more database systems using the certificate permission for each of the two or more database systems. The certificate permissions for each of the two or more database systems is cached in the first volatile memory. The use of the certificate permission may be beneficial because the two or more database systems may require permissions of applications or users querying the two or more database systems. The certificate permission is a permission which is generated for a particular user or application to gain access to each of the two or more database systems using the appropriate permissions. This provides a means for the scanning of the modification journals and also for querying with the updated database query using the appropriate permissions. This may be beneficial in providing appropriate access for the application while at the same time enabling the repeated scanning of the modification journals and the generation of updated database queries.

In another embodiment the certificate permission for each of the two or more database systems is valid until a predetermined time. This may be beneficial because the chances that the permissions for the application to the two or more database systems can be misused is reduced.

In another embodiment the initial query response and the updated query response are received as response portions from each of the two or more database systems individually. The response portions are cached in the first volatile memory. As was mentioned previously this may provide a means for collecting responses from different database systems so they can be combined into the blocks of initial pages of memory for the application data all at one time.

In another embodiment any one of the following are encrypted using the encryption algorithm before storage in the first volatile memory: the response portions, the initial query response, the updated query response, the query meta data, the certificate permission for each of the two or more database systems, and combinations thereof. The use of the encryption may reduce the chances of a hacker obtaining useful information from the first volatile memory. The encryption algorithm could for example use one or more encryption keys which are also stored within the first volatile memory. It may be possible for a hacker to obtain the encryption keys for the encryption algorithm from the first volatile memory, however the hacker must have access to both the keys and also the data that the hacker is interested in. The keys could for example be firewalled in a different portion of the first volatile memory to make the system more secure.

In another embodiment the encryption algorithm is configured for encrypting data in alternating data blocks. Each of the alternating data blocks is encrypted in a predetermined sequence with one of a group of encryption keys. Each of the separate encryption keys is cached in the first volatile memory. In this scheme data encrypted by the encryption algorithm may be broken apart into blocks of a certain size or individual words or entries and they are encrypted using alternating encryption keys. The use of multiple encryption keys may make it more difficult for a hacker to steal data from the first memory.

In another embodiment execution of the first machine-executable instructions further causes the processor to decrypt the alternating data blocks using one of the group of encryption keys according to the predetermined sequence. For example as data is used it could be decrypted on the fly using this scheme. This may provide security of the data within the first volatile memory up until the time that it is used.

In another embodiment execution of the second machine-executable instructions further cause the second processor to terminate the instance of the application. Execution of the second machine-executable instructions further causes the second processor to send an application close message to the first processor via the network connection during termination of the instance of the application. Execution of the first machine-executable instructions further cause the processor to clear the first volatile memory. This may be beneficial in preventing data loss to hackers.

In another aspect the invention provides for a computer-readable storage medium containing first machine-executable instructions for execution by a first processor of a first computer system. The first computer system comprises a first volatile memory. The first machine-executable instructions are configured for implementing a real-time database transactional system. The real-time database transactional system is further configured for connecting to two or more database systems. The first computer system is configured for connecting to a network connection. Execution of the first machine-executable instructions causes the first processor to generate an initial database query using a data request received from the second computer system via the network connection. Execution of the first machine-executable instructions further cause the first processor to query the two or more database systems using the initial database query. Execution of the first machine-executable instructions further cause the first processor to receive an initial query response from the two or more database systems in response to the database query. Execution of the first machine-executable instructions further cause the first processor to transform the initial query response into application data using a memory model. Wherein the memory model is configured for formatting the application data as one or more initial pages of memory. Execution of the first machine-executable instructions further cause the first processor to push the application data across the network connection into a second volatile memory of the second computer system.

In another aspect the invention provides for a communication method between a first computer system and a second computer system using a network connection. The first computer system comprises a first processor. The first computer system comprises a first volatile memory. The first computer system comprises first machine-executable instructions configured for implementing a real-time database transactional system. The real-time database transactional system is further configured for connecting to two or more database systems. The second computer system comprises a second processor. The second computer system comprises a second volatile memory. The second computer system comprises second machine-executable instructions for execution by the second processor to implement an application. The method comprises generating a data request for application data for an instance of the application by the second processor.

The method further comprises sending the data request to the first computer system by the second processor via the network connection. The method further comprises generating an initial database query using a data request by the first processor. The method further comprises querying the two or more database systems using the initial database query by the first processor. The method further comprises receiving an initial query response from the two or more database systems in response to the database query by the first processor. The method further comprises transforming the initial query response into the application data using a memory model. The memory model is configured for formatting the application data as one or more initial pages of memory by the first processor. The method further comprises pushing the application data across the network connection by the first processor. The method further comprises swapping the application data into the second volatile memory by the second processor.

Some examples may contain one or more features of the following examples A) through T) listed below:
Example A). A system to provision contextual information associated with business data, comprising:
   a processor; and
   one or more memory devices communicatively coupled with the processor and storing instructions related to:
      receiving a request to establish a connection at a framework middleware via an application;
      upon processing the request, the application establishing a connection with a plurality of databases associated with a plurality of business management systems via an adapter framework associated with the framework middleware;
      based on the established connection, retrieving business data from the plurality of databases via a real-time provisioning adapter framework associated with the framework middleware;
      based on an execution of a plurality of routines in the framework middleware, triggering a system landscape transformation model to transform the retrieved business data;
      based on one or more parameters associated with the transformed business data, determining a contextual information associated with the transformed business data; and
      rendering the contextual information on a user interface to provision the contextual information associated with the business data.

   The system may for example be a communication system. The business data may for example be application data which is provided as one or more initial pages. The retrieving of the business data may correspond to the receiving of query responses from the two or more database systems. The landscape transformation model may correspond to the memory model. The rendering of the contextual information on the user interface may occur due to the one or more initial pages of memory being swapped into the second volatile memory. The first machine executable instructions may implement the framework middleware, the adapter framework, the real-time provisioning adapter, and/or the landscape transformation model.
Example B). The system of Example A), further comprising: a federation framework associated with the framework middleware to execute one or more sequel queries on one or more tables stored in the plurality of databases and retrieve the business data via the real-time provisioning adapter framework.
Example C). The system of Example A), further comprising: a metadata manager associated with the framework middleware to store metadata information associated with the business data stored in the plurality of databases.
Example D). The system of Example A), further comprising: a data-provisioning manager, comprising:
   a change data adapter component to read log information associated with the plurality of databases;
   a change data services component to read log information associated with the plurality of databases and extract information associated with changed business data; and
   a data access service component to replicate the changed business data in real-time.
Example E). The system of Example A), wherein the framework middleware executes a plurality of routines related to web content management service, document management service, dashboard management service, widget management service and workflow management service.
Example F). The system of Example A), wherein the framework middleware executes the plurality of routines to validate the business data from the plurality of business management systems using one or more local business rules.
Example G). The system of Example A), wherein the framework middleware executes the plurality of routines to encrypt the business data by a sequential data encryption algorithm.
Example H). A computer implemented method to provision contextual information associated with business data, comprising:
   receiving a request to establish a connection at a framework middleware via an application;
   upon processing the request, the application establishing a connection with a plurality of databases associated with a plurality of business management systems via an adapter framework associated with the framework middleware;
   based on the established connection, retrieving business data from the plurality of databases via a real-time provisioning adapter framework associated with the framework middleware;
   based on an execution of a plurality of routines in the framework middleware, triggering a system landscape transformation model to transform the retrieved business data;
   based on one or more parameters associated with the transformed business data, determining a contextual information associated with the transformed business data; and
   rendering the contextual information on a user interface to provision the contextual information associated with the business data.
Example I). The computer implemented method of Example H), further comprising: a federation framework associated with the framework middleware to execute one or more sequel queries on one or more tables stored in the plurality of databases and retrieve the business data via the real-time provisioning adapter framework.
Example J). The computer implemented method of Example H), further comprising: a metadata manager associated with the framework middleware to store metadata information associated with the business data stored in the plurality of databases.
Example K). The computer implemented method of Example H), further comprising: a data-provisioning manager, comprising:
   a change data adapter component to read log information associated with the plurality of databases;
   a change data services component to read log information associated with the plurality of databases and extract information associated with changed business data; and
   a data access service component to replicate the changed business data in real-time.
Example L). The computer implemented method of Example H), wherein the framework middleware executes a plurality of routines related to web content management service, document management service, dashboard management service, widget management service and workflow management service.
Example M). The computer implemented method of Example H), wherein the framework middleware executes the plurality of routines to validate the business data from the plurality of business management systems using one or more local business rules.
Example N). The computer implemented method of Example H), wherein the framework middleware executes the plurality of routines to encrypt the business data by a sequential data encryption algorithm.
Example O). A non-transitory computer readable storage medium tangibly storing instructions, which when executed by a computer, cause the computer to execute operations comprising:
   receiving a request to establish a connection at a framework middleware via an application;
   upon processing the request, the application establishing a connection with a plurality of databases associated with a plurality of business management systems via an adapter framework associated with the framework middleware;
   based on the established connection, retrieving business data from the plurality of databases via a real-time provisioning adapter framework associated with the framework middleware;
   based on an execution of a plurality of routines in the framework middleware, triggering a system landscape transformation model to transform the retrieved business data;
   based on one or more parameters associated with the transformed business data, determining a contextual information associated with the transformed business data; and
   rendering the contextual information on a user interface to provision the contextual information associated with the business data.
Example P). The non-transitory computer readable storage medium of Example O), further comprising instructions which when executed by the computer causes the computer to perform operations, comprising: a federation framework associated with the framework middleware to execute one or more sequel queries on one or more tables stored in the plurality of databases and retrieve the business data via the real-time provisioning adapter framework.
Example Q). The non-transitory computer readable storage medium of Example O), further comprising instructions which when executed by the computer causes the computer to perform operations, comprising: a metadata manager associated with the framework middleware to store metadata information associated with the business data stored in the plurality of databases.
Example R). The non-transitory computer readable storage medium of Example O), further comprising instructions which when executed by the computer causes the computer to perform operations, comprising: a data-provisioning manager, comprising:
   a change data adapter component to read log information associated with the plurality of databases;
   a change data services component to read log information associated with the plurality of databases and extract information associated with changed business data; and
   a data access service component to replicate the changed business data in real-time.
Example S). The non-transitory computer readable storage medium of Example O), wherein the framework middleware executes a plurality of routines related to web content management service, document management service, dashboard management service, widget management service and workflow management service.
Example T). The non-transitory computer readable storage medium of Example O), wherein the framework middleware executes the plurality of routines to validate the business data from the plurality of business management systems using one or more local business rules.

It is understood that one or more of the aforementioned embodiments of the invention and/or examples may be combined as long as the combined embodiments are not mutually exclusive.

### Brief description of the drawings

The claims set forth the embodiments with particularity. The embodiments are illustrated by way of examples and not by way of limitation in the figures of the accompanying drawings in which like references indicate similar elements. The embodiments, together with its advantages, may be best understood from the following detailed description taken in conjunction with the accompanying drawings.
- FIG. 1: is a block diagram illustrating environment to provision contextual information associated with data, according to an example.
- FIG. 2: is a flow diagram illustrating a process to provision contextual information associated with data, according to an example.
- FIG. 3: is a block diagram illustrating a system to provision contextual information associated with data, according to an example.
- FIG. 4: is a block diagram illustrating a sequential data encrypting algorithm to encrypt data, according to an example.
- FIG. 5: is a block diagram illustrating an integration of user management framework and framework middleware, according to an example.
- FIG. 6: is a block diagram illustrating a user management service class, according to an example.
- FIG. 7: is a block diagram showing a dashboard displaying contextual information associated with data, according to an example.
- FIG. 8: is a block diagram illustrating a user interface displaying contextual information associated with data, according to an example.
- FIG. 9: is a block diagram illustrating a dashboard displaying contextual information associated with data, according to an example.
- FIG. 10: is a block diagram illustrating a dashboard displaying contextual information associated with data, according to an example.
- FIG. 11: is a block diagram illustrating a user interface displaying contextual information associated with data, according to an example.
- FIG. 12: is a block diagram illustrating a user interface displaying contextual information associated with data, according to an example.
- FIG. 13: is a block diagram illustrating a user interface displaying contextual information associated with data, according to an example.
- FIG. 14: is a block diagram of a computer system, according to an example.
- FIG. 15: illustrates an example of a communication system.
- FIG. 16: shows a further view of the communication system of FIG. 15.
- FIG. 17: shows a block diagram of of a method of operating the communication system of FIG. 15.

### Detailed Description

Examples of techniques related to integrated framework for provisioning data are described herein. In the following description, numerous specific details are set forth to provide a thorough understanding of the examples. One skilled in the relevant art will recognize, however, that the examples can be practiced without one or more of the specific details, or with other methods, components, materials, etc. In other instances, well-known structures, materials, or operations are not shown or described in detail.

Reference throughout this specification to "one embodiment" or "one example", "this embodiment" or "this example" and similar phrases, means that a particular feature, structure, or characteristic described in connection with the embodiment or example is included in at least one of the one or more embodiments or examples. Thus, the appearances of these phrases in various places throughout this specification are not necessarily all referring to the same embodiment or example. Furthermore, the particular features, structures, or characteristics may be combined in any suitable manner in one or more embodiments or examples.

Advancements in technology have contributed to growth of enterprises and increased volume of data associated with an enterprise. References to "data" herein may also refer to "business data." Such data may be stored in geographically distributed data repositories (e.g., data stores, databases, etc.). The data may be accessed and modified by multiple systems and applications that may be deployed on different platforms (e.g., on-premise environment, cloud computing environment, etc.) in the enterprise. In such a scenario, the data may be altered and may result in generating data that may be inconsistent. For example, the data maybe repetitive, redundant and may be stored multiple formats (e.g., data types) thereby adding to the inconsistency. To eliminate such inconsistency, the enterprise may provide a framework that may communicate with the different systems and applications (e.g., management systems and applications) in the enterprise. References to "management systems" herein may also refer to "business management systems."

In an example, a framework (also referred to as a framework middleware) may facilitate provisioning the data by maintaining consistency, security and integrity of the data. The framework middleware may provide unified architecture and design across different platforms to enable reusability of system and application components (e.g., existing user interface (Ul) applications or parts of applications, data, etc.). Therefore, the framework middleware may optimize the performance of the systems and applications and hence provision a platform for the systems and applications to work in conjunction with each other.
In an example, the framework middleware may facilitate retrieving and storing data in systems and applications that may be deployed on premise or in distributed environment (e.g., cloud computing environment). The framework middleware may provide a platform that may work in conjunction with an application (e.g., data provisioning application) and multiple systems (e.g., management systems, such as Partner Relationship management (PRM), Enterprise Resource Planning (ERP), Customer Relationship Management (CRM), Service Mobile Platform (SMP), Ramp-up Knowledge Transfer (RKT), Learning Solutions (LSO), etc.). In an example, a management system may include an integration of applications for facilitating and managing data activities in an organization or a factory. The management system may also be referred to as a data management system. The management system may in some examples be control system for controlling machinery or a manufacturing process. The application may provision data that may be personalized and customized based on a preference of an end user. The application may be designed based on a model view controller (MVC) which may provide definitions to distinguish between operations, such as processing control, data models and displaying or rendering the data on a user interface or a dashboard.

In an example, an application designed based on MVC may be used as an object that may be used to administer the data. Such an object may respond to information requests from the process control. In an example, personalizing the data may include determining: contextual information associated with the data, user preferences, application of localization rules, application of language preferences, etc. Further, the provisioning of personalized data may be enhanced by customizing the personalized data using rules and user interface (Ul) components. Such customization may enhance and improve the user experience, when consuming the data.

In an example, the framework middleware may include integrated frameworks and/or software components (also referred to as a component) executing specific functionalities. The software components in the framework middleware may work in conjunction with each other. In an example, a software component may correspond to set of instructions or program code that may be reused based on definition and implementation. Based on executed operations, the cooperation between the software components may facilitate instantiation of models, user interface engines, customizing contextual information associated with the data, managing behavior of the GUIs at the design time and runtime, etc.

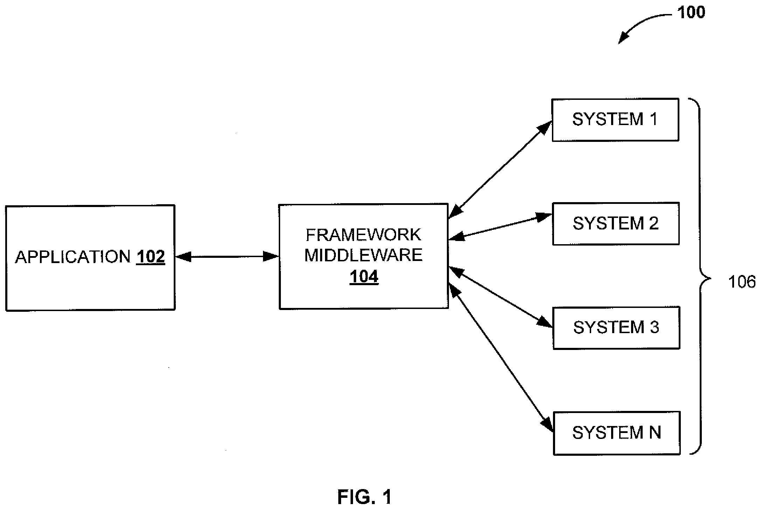

FIG. 1 is a block diagram illustrating environment 100 to provision contextual information associated with data, according to an example. In an example, FIG. 1 shows application 102 (e.g., data provisioning application) in communication with framework middleware 104. The framework middleware 104 may be in communication with multiple management systems 106 (e.g., databases associated with the management systems that may be deployed in on-premise, cloud computing environments, analytics system and databases (row wise, column wise, etc.)). In an example, application 102 may include an integration of multiple user interface (Ul) components, UI engines, rules, theming rules (e.g., themes for customizing the data), user session management rules, etc. The UI components and engines may facilitate customizing personalized data and displaying the customized data on a user interface (not shown) or a dashboard (not shown) to enhance and improve user experience when consuming the data.

In an example, framework middleware 104 may include an integration of multiple routines (e.g., sequence of program instructions), operational engines (e.g., data customization and content management engines, user management engine, etc.), data models, frameworks (e.g., data provisioning framework, adapter framework, federation framework, real-time provisioning adapter, etc.), software components (e.g., metadata manager, metadata, etc.), etc. The execution of multiple routines, software components, frameworks, etc., in conjunction with each other may facilitate providing specific functions or tasks. The framework middleware 104 may execute tasks such as triggering data models, retrieving data from the multiple management systems (e.g., 106) using data services, retrieving the data from the multiple management systems (e.g., 106), replicating the data, transforming data based on system landscape transformation models, structuring data based on the data models, managing users (e.g., registration, creating user identity, authorization, authentication, etc.) across the multiple systems, maintaining consistency and integrity of the business data, encrypting the business data, triggering events within or between the multiple systems, etc.

In an example, framework middleware 104 may receive a request from application 102 (e.g., data provisioning application) to establish a connection. Upon processing the request, application 102 may establish the connection with the multiple management systems 106 via an adapter framework associated with framework middleware 104. A user logged into application 102 may be authenticated by executing routines in framework middleware 104. The framework middleware 104 may retrieve the data via a real-time provisioning adapter framework associated with framework middleware 104. The framework middleware 104 may execute routines to trigger a system landscape model to transform the retrieved data. Based on parameters (e.g., user credentials such as user roles, attributes related to information access, etc.), framework middleware 104 may determine contextual information associated with the transformed data. Upon determining the contextual information, application 102 may instantiate a user interface or a dashboard to render the contextual information associated with the transformed data. The contextual information displayed on the user interface or dashboard may further be customized based on user preferences to enhance and improve the user experience, when consuming the data.

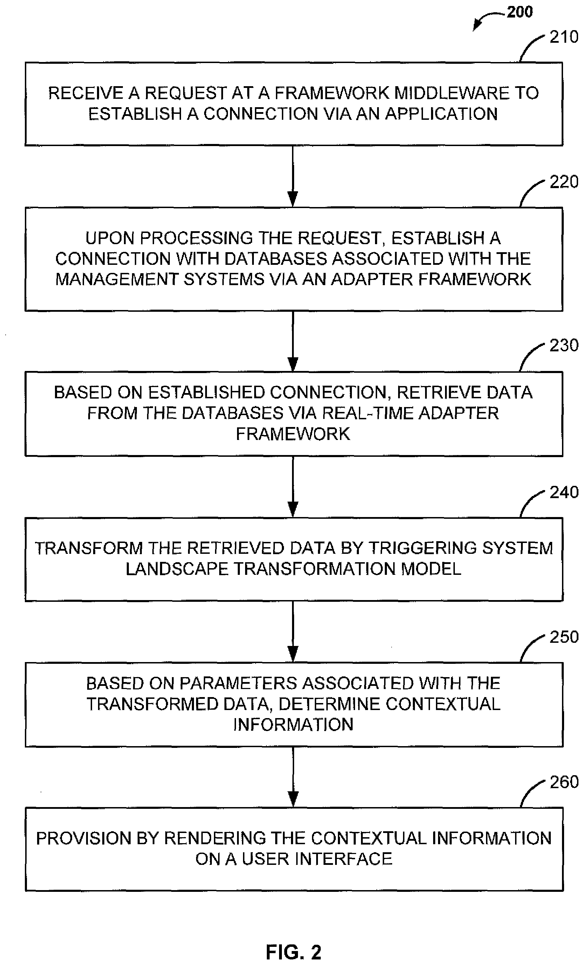

FIG. 2 is a flow diagram illustrating a process 200 to provision contextual information associated with data, according to an example. In an example, contextual information associated with the data may be determined and rendered on a user interface. The contextual information displayed on the user interface or the dashboard may be personalized and customized (e.g., by theming, styling content) based on user preferences. In an example, a framework middleware may be in communication with an application and multiple data stores associated with multiple management systems (e.g., 106). The application may provide a platform (e.g., data provisioning platform) for consuming the data by a user. Such platform may include an integration of user interfaces or dashboards that may be instantiated by the UI engines to render the data. The application may be in communication and work in conjunction with the framework middleware. The application may execute functionalities such as access control to multiple related, but independent software systems (e.g., single sign-on implementation (SSO)), session management, filtering of data based on location (e.g., localization), enhancing graphical appearance of the data using graphical control elements, window size and shapes, etc.

In an example, the framework middleware receives a request to establish a connection via the application, at 210. The application may be deployed in an on premise computing environment or distributed computing environment (e.g., cloud computing environment). In another example, the application may be customized and deployed to execute as a mobile application on a tablet computer, a mobile device, a multifunction portable electronic device, etc. In an example, upon processing the request, the application establishes a connection with the multiple databases associated with the management systems via an adapter framework associated with the framework middleware, at 220. The databases may store data in different formats and multiple data structures (e.g., table, flat files, etc.).
In an example, the data stored in the multiple data stores may correspond to data and information generated by the management systems. For example, the management systems may include CRM, ERP, PRM, SMP, RKT, LSO, etc. The data from the multiple management systems may be stored in multiple geographically distributed databases. In an example, based on the established connection, data is retrieved from the databases via real-time adapter framework associated with the framework middleware, at 230. Upon retrieving the data via the real-time adapter framework, routines deployed in the framework middleware may be executed. The execution of such routines may trigger system landscape model to transform the retrieved data in a user-defined format.

In an example, the data retrieved from the multiple databases is transformed by triggering the system landscape transformation model, at 240. The execution of routines in the framework middleware may correspond to execution of system landscape transformation model. Such a transformation modifies the data to associate with or conform to the data models. For example, data in one format (e.g., a word processing complaint format, such as .doc, .docx) may be transformed to another format (e.g., based on data models that may correspond to plain text format; rich text format, etc.). In an example, transforming the data may include integrating process model and data (e.g., executing rules, identifying entity types (binding of data and functionality), etc.). The data models may include definitions and format of data and may provide a unified platform for development of information systems.

In an example, the transformed data may be structured, and include or be associated with contextual information. The transformed data may also include identifiers and parameters or determining or identifying contextual information associated with the data. In an example, the identifiers may facilitate operations, such as determining the contextual information, providing access control to data and/or the contextual information, localization of the data, filtering and customization of the data or the contextual information associated with the data based on user preferences, etc. Upon user authentication, the contextual information may be rendered on the user interface or the dashboards. The identifiers associated with the contextual information may be matched with the user attributes (e.g., attributes related to user authorization or authentication, user preferences, etc.) to determine providing accessibility to the contextual information or the associated data.

In an example, based on parameters associated with the transformed data, the contextual information associated with the data is determined, at 250. The contextual information associated with the data may be determined by executing the routines in the framework middleware. The execution of the routines may include matching the user attributes and the identifiers associated with the contextual information associated with the data. In an example, the user attributes may be related to a designation (e.g., role and responsibilities of a user/employee in an organization), regional and language preferences, preferences related to contextual information associated with the data, user identity, accessibility and authorization, etc.

In an example, the contextual information associated with the data is provisioned by rendering the contextual information on a user interface, at 260. The contextual information displayed on the user interface may be personalized or customized based on user preferences and authorization privileges. In an example, the customizing engines in the application may customize the contextual information to enhance and improve visual appearance of the contextual information displayed on the user interface. In an example, the framework middleware may include routines related to content management engines, such as web content management engine, document management engine, dashboard management engine, widget management engine, workflow management engine, etc., that may work in conjunction with each other. The content management engines may be triggered by workflow management routines to execute respective functions.

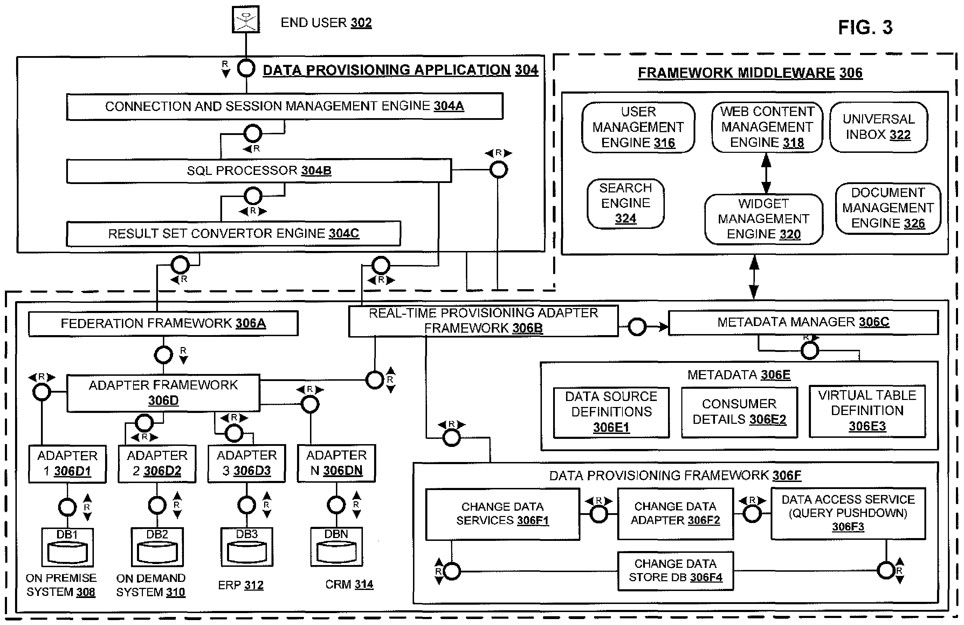

FIG. 3 is a block diagram illustrating a system to provision contextual information associated with data, according to an example. In an example, data provisioning application 304 may be in communication with framework middleware 306 over a network (not shown). The data provisioning application 304 may include an integration of multiple user interface (Ul) application components and data fields that may facilitate storing data from multiple management systems. The UI application components may be created using a generic data model (e.g., data including metadata) that may store data from the multiple management systems as per user preferences.
In an example, data provisioning application 304 may include an integration of components or engines (e.g., connection and session management engine 304A, SQL Processor 304B, result set convertor engine 304C, etc.) that may work in conjunction with each other. The integrated components or engines may provision contextual information associated with the data to an end user 302. In an example, data provisioning application 304 may include connection and session management engine 304A to establish and manage connections with framework middleware 306. A sequel (SQL) processor 304B engine may facilitate execution of SQL queries for retrieving data from the databases (e.g., DB1, DB2, DB3, DBN, etc.). A result set convertor engine 304C may convert or transform the data into a format (e.g., Java Script Object Notion (JSON), supported by data provisioning application 304.

In an example, framework middleware 306 includes an integration of routines related to: triggering system landscape transformation data models, providing/ consuming data services, managing users via user management engine 316, managing content using content management engines, such as web content management engine 318, document management engine 326, widget management engine 320, workflow management engine, universal inbox 322, search engine 324, etc. In an example, the system landscape transformation model may trigger operations (e.g., execute operations such as delete, update, modify, add, etc., on database tables). The system landscape transformation model may include mapping information associated with the data (e.g., storage information related to the data).

In an example, web content management engine 318 may include content classes, access control parameters, provisioning for customization and content management including language preference, templates, workflow, web pages, etc. The document management engine 326 may provision for customization and management related to digital documents including access control parameters, meta data, versioning, workflow, retention, etc. In an example, widget management engine 320 may be configured during the design time. The widget management engine 320 may provide customized widgets that may be added to dashboards or user interfaces to enhance and improve the visual appearance of the information displayed. The widget management engine 320 may be configured using network tools during design time and executed during runtime. Additionally the widget management engine 320 may be used to generate views that may be associated with the multiple management systems. The universal inbox 322 may facilitate as a central inbox for all workflows and action items. The search engine 324 may execute search queries and may enable searching for the data.

In an example, user management engine 316 may manage user registration, user identities, user authorization (e.g., using SSO) for accessing data and/or the contextual information associated with the data. The user management engine 316 may execute operations, such as user registrations, generate and validate user identities (e.g., user roles, profiles and access control to data), provide user authorization or authentication, etc.
In an example, end user 302 may login into data provisioning application 304 and may interact with data provisioning application 304 to consume the data (or contextual information associated with the data). To provision the contextual information to end user 302, data provisioning application 304 may establish a connection with framework middleware 306. The framework middleware 306 may communicate with the multiple remote databases (e.g., DB1, DB2, DB3, DBN, etc.) associated with the multiple management systems (e.g., 308, 310, 312, 314) via adapter framework (e.g., 306D, 306D1, 306D2, 306D3, 306DN, etc.).

In an example, adapter framework 306D may include an integration of multiple routines and stored procedures. The adapter framework 306D may facilitate provisioning of the contextual information or the data by executing the routines and stored procedures. The adapter framework 306D may include an integration of application package interfaces (APIs) to facilitate interaction and communication with the remote databases associated with management systems (e.g., DB1, DB2, DB3, DBN, etc., associated with 308, 310, 312, 314, etc.) respectively via adapter frameworks (e.g., 306D1, 306D2, 306D3, 306DN, etc.). The adapter framework 306D may dynamically create a user certificate with limited validity to access the data from the databases. The adapter framework 306D may also authenticate the user based on user authentication information (e.g., user name, password, etc.) and database authentication information (e.g., DB user name, DB password, etc.). Upon authentication and connection establishment, adapter framework 306D may access and retrieve the metadata information from the databases. Such metadata information may be associated with the data structures (e.g., tables, flat files, etc.) storing the data from management systems (e.g., on-premise system 308, on demand system 310, ERP 312, CRM 314, etc.). The adapter framework 306D may be configured to access data stored in different formats.

In an example, upon establishing the connection with the databases, data provisioning application 304 may determine, retrieve and locally store the metadata information. For example, such metadata information may correspond to schema name, table name, data fields, etc. When the user attempts to access the data, stored procedures, SQL queries, etc., may be triggered and the SQL processor 304B in data provisioning application 304 may process such queries and stored procedures. In an example, the queries may be executed or pushed down to the databases via federation framework 306A. In an example, federation framework 306A may execute the queries or stored procedures by data access services. The federation framework 306A may be optimized to connect and access the data from the databases.

In an example, upon executing the queries and stored procedures, the data may be retrieved via real-time provisioning adapter framework 306B. In an example, real-time provisioning adapter framework 306B may facilitate accessing the data in real-time. The changes in the data may be instantaneously captured and reflected via real-time provisioning adapter framework 306B. In an example, real-time provisioning adapter framework 306B may be configured to determine functional status and availability of the databases (e.g., DB1, DB2, DB3, DBN, etc.). For example, the remote databases (e.g., DB1, DB2, DB3, DBN, etc.) may attain temporarily non-functional status. When such an instance is detected, real-time provisioning adapter framework 306B may facilitate accessing the data persisted in the persistency layer of the databases (e.g., DB1, DB2, DB3, DBN, etc.). Such persistent data may be replicated to data provisioning application 304, when end user 302 consumes the data. In an example, when the remote databases (e.g., DB1, DB2, DB3, DBN, etc.) assume functional status, real-time data may be replicated to data provisioning application 304 via real-time provisioning adapter framework 306B.

In an example, result set convertor engine 304C may facilitate conversion or transformation the data into a data model (e.g., JSON document model) supported by data provisioning application 304. The JSON document model may be independent of the underlying schema that may facilitate interaction, analysis, assimilation and provisioning of the data by data provisioning application 304. In an example, framework middleware 306 may include an integration of a metadata manager 306C component. The metadata manager 306C associated with framework middleware 306 may manage metadata 306E related information. Such metadata 306E information may correspond to data source definitions 306E1, virtual table definitions 306E3, information related to users (e.g., consumer details 306E2), etc.

In an example, framework middleware 306 may include an integration of data provisioning framework 306F. The data provisioning framework 306F associated with framework middleware 306 may include an integration of software components such as change data services 306F1, change data adapter 306F2, data access service (for pushing down queries) 306F3, change data store DB 306F4, etc. In an example, change data services 306F1 software component may be configured to read database logs. The change data services 306F1 component may forward the data extracted from data definition language (DDL - statements for creating and administering database tables) and data manipulation language (DML - statements for reading and changing data in database tables) to change data adapter 306F2 software component. The change data services 306F1 software component may read the database log and track database specific log changes.

In an example, change data adapter 306F2 software component may read database logs and stream data to data provisioning framework 306F. The change data adapter 306F2 component may facilitate real-time change data capturing (CDC) in response to a detection of change in the data in the databases. In an example, data access service 306F3 software component may work in conjunction with change data services 306F1 component to facilitate capturing and replication of the data in real-time. The data access service 306F3 software component may facilitate pushing down the queries to the respective databases, manage connections with the databases and may track of the status of transactions (e.g., committed, rolled-back, skipped, etc.). The data access service 306F3 software component may facilitate operations such as clustering or grouping smaller transactions into larger transactions, aggregating change messages into minimal set of commands for tables, applying database specific optimization techniques, etc.

In an example, change data store DB 306F4 may facilitate persisting of the data. For example, change data store DB 306F4 may work in conjunction with change data services 306F1 software component to persist changes in data when consumed by end users or when target table is locked for other operations. In an example, framework middleware 306 may provide a common interface for accessing the data from the databases. Such an arrangement may optimize consumption of memory by applications that are executing in the multiple management systems. The applications running on the multiple management systems may have access to tables and/or attributes and/or rows including the data. The framework middleware 306 may facilitate storing routines related to local rules and global rules for validating the data from the multiple management systems.

In an example, when the validation of the data fails, the user may be notified by displaying an error message on the user interface or the dashboard. The global rules may be executed to validate the data, and upon validation the data between multiple databases may be synchronized. When the validation of data based on global rules fails, the data is not synchronized or replicated, but is stored locally in data provisioning application 304. The user may be notified by displaying suitable error message on the user interface or the dashboard.

In an example, framework middleware 306 may include routines to provide authorization to only certain sections (e.g., partially) of data. For instance, using access control mechanisms, framework middleware 306 may be configured to provide an access to certain sections and/or content in a document. Such a partial access to the content may be implemented by executing a combination of rules and access control techniques. In an example, the accessibility to the data (e.g., text, multimedia, graphical visualizations, etc.) residing in the data fields in data structures (e.g., table, spreadsheet, etc.) may also be controlled. In an example, the document may be accessed by multiple management systems over the network and additional rules may be executed by framework middleware 306 to regulate operations, such as read only, write only, read-write, etc., depending on which management system accesses the document.

In an example, framework middleware 306 may include routines that may validate the quality, consistency and integrity of data retrieved from or replicated to multiple databases (e.g., DB1, DB2, DB3, DBN, etc.). The framework middleware 306 may provide mechanisms for governing and maintain the integrity and consistency of the data, when the data is replicated to multiple databases (e.g., DB1, DB2, DB3, DBN, etc.). For example, when the data is stored in a object, which may be accessed and modified by accessed by multiple management systems, the integrity and consistency of the data in the object may need to be validated before replicating it to the other management systems. In such a scenario, executing rules in framework middleware 306 may validate the integrity and consistency of the data in the object. The replication of the object may be logged, tracked and stored in tables (e.g., tracking tables) in the database.

In an example, objects may encapsulate a function and the data and may be linked with or dependent on other objects. In such an arrangement, framework middleware 306 may execute routines for intelligent replication of the objects (e.g., intelligent replication of objects or data includes executing routines in framework middleware 306 that work in conjunction with remote function calls (RFCs)). For example, let a object "OPPORTUNITY" be linked with objects, such as "EMPLOYEE", " PARTNER", "PARTNER FUNCTION," etc. When the object "OPPORTUNITY" is to be distributed or shared (e.g., replicated) between multiple management systems, the execution of routines in the framework middleware 306 may determine that the object "OPPORTUNITY" is linked with other objects, such as "EMPLOYEE", " PARTNER", "PARTNER FUNCTION," etc., and may replicate the other objects (e.g., "EMPLOYEE", " PARTNER", "PARTNER FUNCTION," etc.), when the object "OPPORTUNITY" is replicated.

In an example, framework middleware 306 may include routines to check for dependencies between the attributes of the same object. For example, framework middleware 306 may include routines that determine dependency between 'COUNTRY' and 'STATE' data fields within the same object. In another example, the dependent data fields (e.g., 'COUNTRY' and 'STATE') may reside in different objects. The execution of such routines in framework middleware 306 may determine dependencies between the objects and alerts the user when missing dependent objects are detected. In an example, framework middleware 306 may be configured to replicate the data to multiple management systems (e.g., 308, 310, 312, 314, etc.) on periodic basis. For example, such periodic time intervals may include immediately, hourly, daily, weekly, monthly, etc.

In an example, when the data or the objects including the data are modified (e.g., updated, deleted, added, etc.) in framework middleware 306, the modifications may be replicated to other business management systems (e.g., 308, 310, 312, 314, etc.). The framework middleware 306 may execute business rules to keep a track of such data modifications. The business data between the multiple business management systems may be replicated at periodic intervals of time (e.g., immediately, hourly, daily, weekly, etc.). Such periodic updates avoid situations that may generate inconsistent data due to network latencies, data packet loss, etc. The data may be replicated between multiple management systems (e.g., 308, 310, 312, 314, etc.) based on the requirements. In an example, framework middleware 306 may include routines to determine duplication of the data, when the data is replicated. When duplicate data is detected the end user may be notified of such duplication.

In an example, framework middleware 306 may include routines that trigger specific events for specific values of the data. The triggering of the events may be ordered and may be executed either in the same management system or different management systems (e.g., 308, 310, 312, 314, etc.). The framework middleware 306 may provide functionalities, such as user group classification, user identification based on roles, responsibilities and attributes associated with the user identity, user authorization and authentication, etc. The framework middleware 306 may include routines to monitor user activities and generate alerts based on the user behavioral patterns.

In an example, framework middleware 306 provides a holistic and integrated platform for the real-time analysis, aggregation and visualization of high volumes, velocities and diversity of the data. The framework middleware 306 may include routines categorized as "sentiment intelligence" that may determine and analyze comments, suggestions and opinions posted by end users; deliver personalized engaging experiences that may be used to support and take more responsive decisions. The framework middleware 306 may perform stream analysis that may monitor the incoming events in real-time, detect error patterns, aggregate, analyze and respond to events, errors, etc., by triggering certain events, workflows, etc. The framework middleware 306 may execute routines to communicate with the multiple management systems (e.g., 308, 310, 312, 314, etc.) and track for updates in the data. In an example the multiple management systems (e.g., 308, 310, 312, 314, etc.) may communicate with each other via framework middleware 306. The multiple management systems may be authenticated using digital and security certificates.

In an example, framework middleware 306 may include routines to encrypt the data retrieved from multiple management systems (e.g., 308, 310, 312, 314, etc.). For example, the data may be encrypted by executing a sequential data encrypting algorithm. The sequential data encrypting algorithm may encrypt the data using multiple keys (e.g., a first key, a second key, etc.). In an example, the data may be partitioned based on user preferences or using standard data sizes (e.g., bits, bytes, words, etc.), and the sequential data encrypting algorithm may be executed to encrypt the partitioned data.

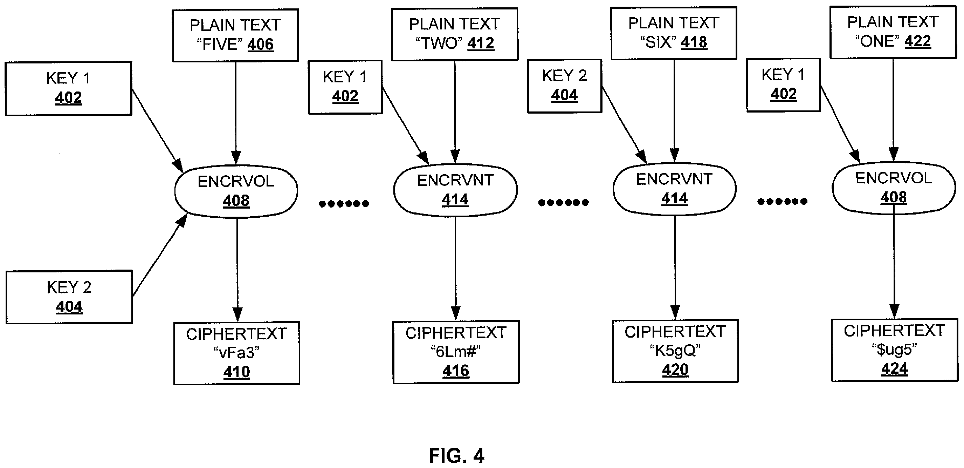

FIG. 4 is a block diagram illustrating a sequential data encrypting algorithm to encrypt data, according to an example. In an example, the execution of sequential data encryption algorithm to encrypt the data may include: a first step of initialization that includes providing input of multiple keys (e.g., the first key 402 and the second key 404) and the first word 406 (e.g., data) to be encrypted, and initialize a word count to '1'. The first word "FIVE" 406 may be encrypted "ENCRVOL" 408 to get an encrypted word (e.g., CIPHERTEXT) "vFa3" 410. Upon encrypting the word in the first step, a second step may include encrypting a second word 412 (e.g., data) using the output of the first step (e.g. word encrypted using the first key 402 and the second key 404). For instance, the second word "TWO" 412 may be encrypted (e.g., "ENCRVNT" 414) by using a combination of the output of the first step ("vFa3") and the first key 402 to get an encrypted second word (e.g., CIPHERTEXT) "6Lm#" 416. Upon encrypting the second word 412, increment the word count by '1'. A third word "SIX" 418 may be encrypted (e.g., "ENCRVNT" 414) by using a combination of output of the second step (e.g., "6Lm#") and the second key 404 and incrementing the word count by '1'. The encrypted third word may be represented by "K5gQ" 420.

In an example, the data may be encrypted by executing the above steps until the last word is reached. The encryption may continue until the word count reaches a desired number (e.g., word count = '100'). When the value of word count reaches '100', the words logic for encrypting (e.g., "ENCRVOL" 408) the subsequent words (e.g., "ONE" 422) may include using a combination of the first key 402 and the encrypted word (e.g., "K5gQ" 420) from the previous iteration for encrypting the subsequent word to generated encrypted word "$ug5" 424 and so on.
In an example, advantages of sequential encryption may include: an elimination of need for a random initialization vector for encrypting the data, need for specific data sizes (e.g., bits, bytes, words, etc.) of data, etc. Sequential encryption mechanism for encrypting the data (e.g., as described above) provides robust data security and efficient data management and handling mechanisms, when the data size varies. Based on the nature and property of data, the user may be provided with an adaptability to customize or define the size of data. Such adaptability may provide the user to partially encrypt blocks of data.

FIG. 4 can for example be used to explain the following encryption algorithm. The below Algorithm (Multiple Sequential Encryption with two keys) is not limited to the block size (message size) and so it can work with smaller blocks to individual bits. The encryption of big updates are done using multiple encryption (m times) when compared with small updates which uses single encryption (n times where m>n)
1. Use the Keys Key 1 & Key 2 and the first word to be encrypted as input to the Encryption Algorithm. Initialize the word count to 1.
2. Get the output from the Encryption Algorithm.
3. Use the output of the Step 2 as one input and the next word to be encrypted as the second input to the Encryption Algorithm.
4. Repeat step 2 and step 3 until the last word is reached.
5. If the last word is not reached then use the Key 1 as one input & the output text of the previous word encryption algorithm to encrypt the next word. Repeat steps 2 & 3 until the end of record is reached else go to step 7.
6. If the last word is not reached and the count = 100 then use the Key 2 as one input & the output text of the previous word encryption algorithm to encrypt the next word. Update the word count. Go to step 4.
7. Else Terminate the process (i.e., Stop & exit)

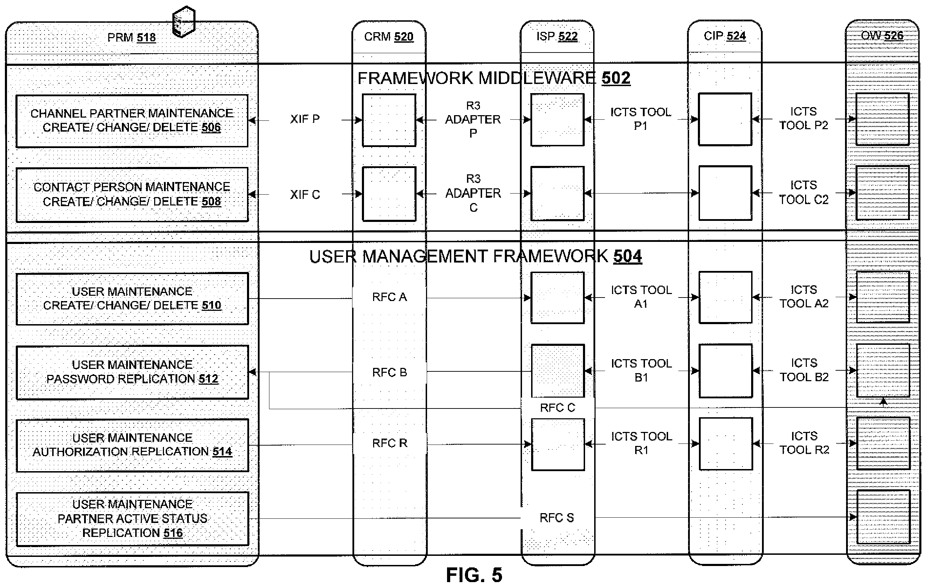

FIG. 5 is a block diagram illustrating an integration of user management framework and framework middleware, according to an example. FIG. 5 shows an integration of user management framework 504, and framework middleware 502 to manage user between multiple management systems 518, 520, 522, 524 and 526. In an example, a user may be registered via user management engine (e.g., 316 in FIG. 3) may be authenticated or authorized by executing routines in framework middleware 502. The routines may include instructions that may be packaged (e.g., software package of meta packages, classes, etc.) and stored in a hierarchy (e.g., packages may be bundled and may include instructions to execute operations related to UI components, database tables, message classes, shared memory classes, toolbox classes, data dictionary objects, online text repositories, authorization objects, reports, enterprise services, etc.). The packages may be stored in different layers in framework middleware 502 or in user management framework 504. In an example, the software packages may be stored in groups (e.g., UI components may be bundled and stored in a object layer (BOL); Generic Interaction Layer (GENIL) components may be stored as one package; proxy objects may be stored in one group; common and generic functions may be packaged and stored as one group; etc.).

For example, framework middleware 502 may include modules 506 and 508 to manage information related to channel partner and associated contacts (e.g., CHANNEL PARTNER MAINTENANCE 506 and CONTACT PERSON MAINTENANCE 508). The information related to channel partner and associated contacts may be modified (e.g., Create, Change, Delete, etc.) through user interface provided by the application. The information related to channel partner and associated contacts may be managed by executing routines in 506 and 508 in framework middleware 502. In an example, user management framework 504 may include modules 510, 512, 514 and 516. The user management framework 504 may include creating and maintaining users (e.g., USER MAINTENANCE 510); user password replication (e.g., USER MAINTENANCE PASSWORD REPLICATION 512); user authorization replication (e.g., USER MAINTENANCE AUTHORIZATION REPLICATION 514); and partner status replication (e.g., USER MAINTENANCE PARTNER ACTIVE STATUS REPLICATION 516).

In an example, when the user attempts to access data via the user interface or the dashboard in the application, user management engine in framework middleware may be triggered to execute user authorization and authentication (e.g., user validation) routines. Such user validations may be executed in framework middleware, while the application is being executed in a front end. As explained previously, such validations may be executed by matching the identifiers associated with the contextual information associated with the data or the identifiers associated with the data with the user attributes. Upon successful validation, the data and/or the contextual information may be displayed on the user interface to the end user.

In an example, the information associated with the users (510 - 516) may be replicated and managed across multiple management systems (e.g., 518, 520, 522, 524 and 526). The users may be authenticated or authorized by using security certificates. The user may be assigned an identity and every request for accessing or modifying data may be authenticated by an identity provide in framework middleware. The identity provider may be configured to establish trusted communication between the user and multiple management systems (e.g., 518, 520, 522, 524 and 526). The user authorization may also include attributes, such as user profiles, organizational roles, etc., that may be used to provide access to the data.

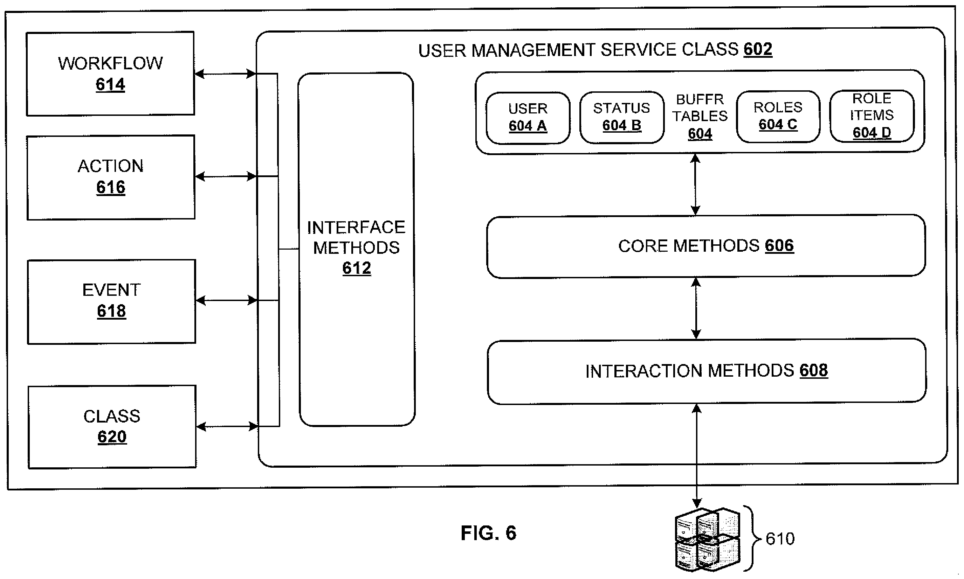

FIG. 6 is a block diagram illustrating a user management service class, according to an example. FIG. 6 shows user management service class 602 (e.g., user management framework (e.g., 504 of FIG. 5) implemented as a service class) that may coordinate and manage all tasks and functionalities related to user management. In an example, user management service class 602 may include buffer tables 604 (e.g., that store attributes and data related to user 604 A, status 604 B, roles 604 C, role items 604 D, etc.), core methods 606, interaction methods 608, interface methods 612, etc., (e.g., all the above methods may be executed as routines in framework middleware). The interaction methods 608 may communicate with external management systems 610 and core methods 606 may include logic related to data management. The interface methods 612 may be called or executed or invoked by internal workflow 614, action 616, event 618, or class 620 (e.g., other classes/ methods). In an example, user management service class 602 may also be used to create new users and assign user identities. The user management service class 602 may be configured to grant access to content at different levels such as at document level, version level, etc.

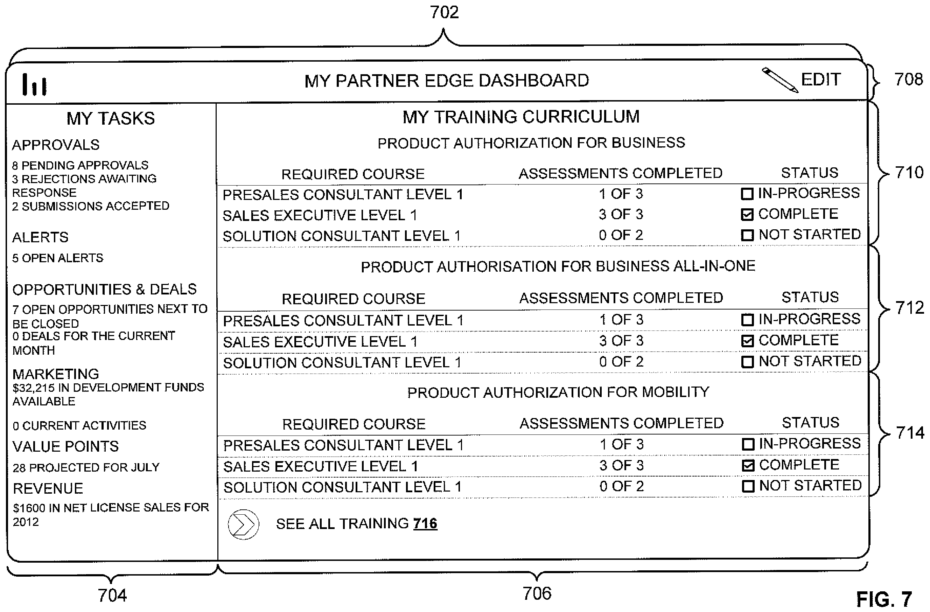

FIG. 7 is a block diagram showing a dashboard displaying contextual information associated with data, according to an example. In an example, a data provisioning application may instantiate a user interface or dashboard 702 to display the contextual information associated with data. FIG. 7 shows dashboard 702 displaying contextual information (e.g., 710, 712 and 714; MY TRAINING CURRICULUM) associated with data. The dashboard 702 includes status bar 708 rendering information related to a partner (e.g., MY PARTNER EDGE DASHBOARD). The information displayed on dashboard 702 may be modified or edited (e.g., by clicking on EDIT in 708). The dashboard 702 displays the contextual information (e.g., 710, 712 and 714) associated with the data may include information that may be categorized (e.g., MY TASKS 704; MY TRAINING CURRICULUM 706). The contextual information (e.g., 710, 712 and 714) associated with the data may be retrieved from multiple management systems and displayed on dashboard 702. The training information associated with the other trainings may be accessed by clicking on 716.

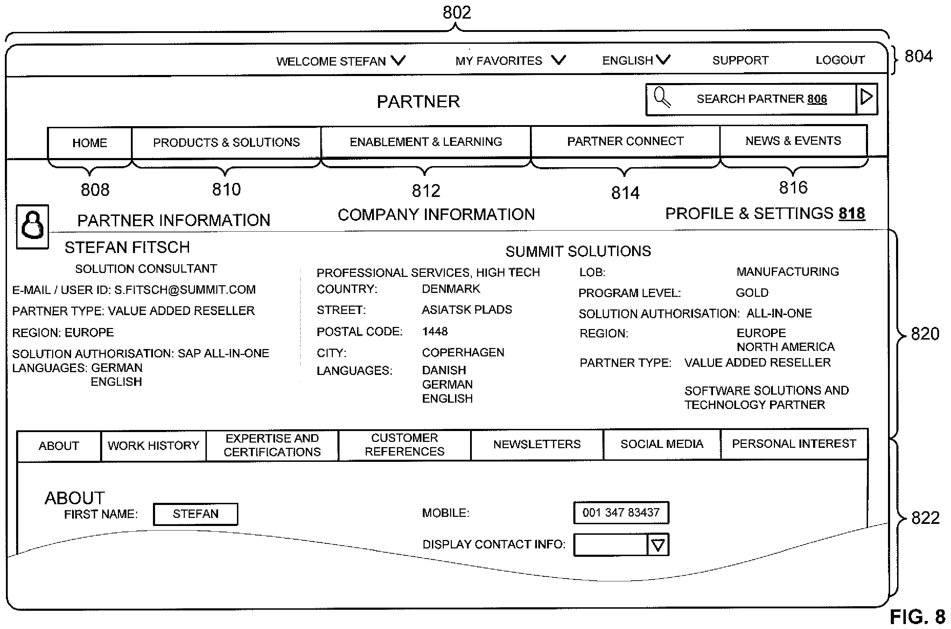

FIG. 8 is a block diagram illustrating a user interface displaying contextual information associated with data, according to an example. FIG. 8 shows user interface 802 displaying contextual information (e.g., "PARTNER" information) associated with the data. Status bar 804 on user interface 802 includes information associated with a user (e.g., WELCOME STEFAN), who is logged into the application; a UI element to navigate to favorite content (e.g., MY FAVORITES), a UI element to change language (e.g., ENGLISH); UI element to navigate to technical support (e.g., SUPPORT) and UI element to log off from the application (e.g., LOGOUT). The information associated with the partner may be searched by entering search query in 806. The partner information may be modified by clicking on "PROFILE & SETTINGS" 818. A user may click on the UI elements (e.g., TABS) 808, 810, 812, 814 and 816 and may navigate to the respective user interface to access the information therein. User interface 802 displays "PARTNER INFORMATION" and "COMPANY INFORMATION" as shown by 820. Other details related to the partner (e.g., STEFAN FITCH) may be accessed via the UI elements shown by 822.

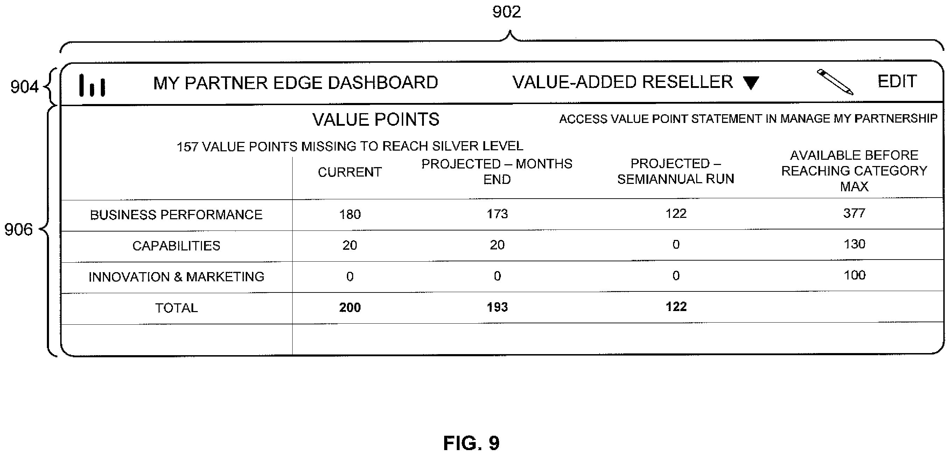

FIG. 9 is a block diagram illustrating a dashboard displaying contextual information associated with data, according to an example. Dashboard 902 shows status bar 904 that includes information related to partner (e.g., MY PARTNER EDGE DASHBOARD), status qualifier associated with the partner (e.g., VALUE-ADDED RESELLER) and UI element to modify or edit (e.g., EDIT) information associated with the partner. Dashboard 902 shows contextual information 906 that includes information associated with the "VALUE POINTS" and associated statistical data.

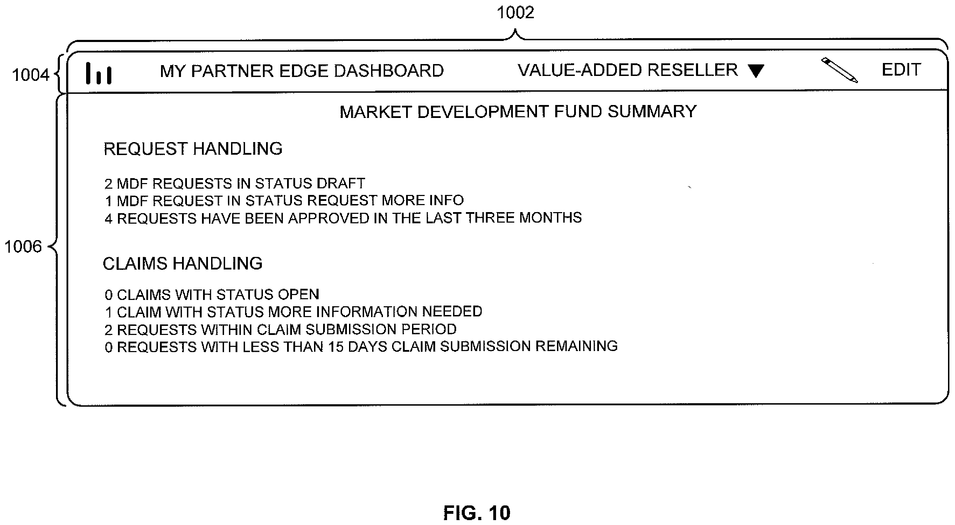

FIG. 10 is a block diagram illustrating a dashboard displaying contextual information associated with data, according to an example. Dashboard 1002 shows status bar 1004 that includes information related to partner (e.g., MY PARTNER EDGE DASHBOARD), status qualifier associated with the partner (e.g., VALUE-ADDED RESELLER) and UI element to modify or edit (e.g., EDIT) information associated with the partner. Dashboard 1002 shows contextual information 1006 that includes information associated with the "MARKET DEVELOPMENT FUND SUMMARY" including "REQUEST HANDLING" and "CLAIMS HANDLING" information.

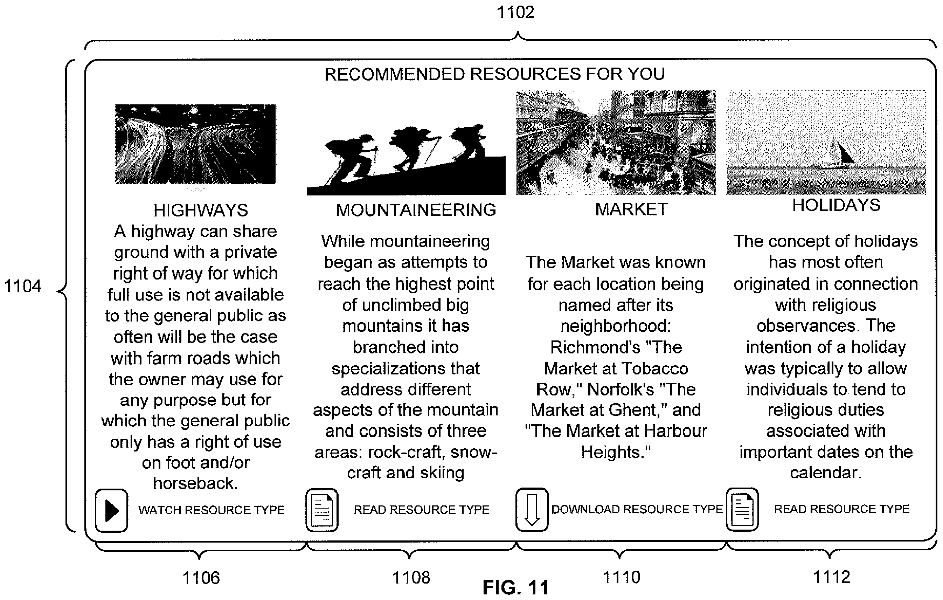

FIG. 11 is a block diagram illustrating a user interface displaying contextual information associated with data, according to an example. FIG. 11 shows user interface 1102 displaying contextual information 1104 associated with the data. The contextual information 1104 may be arranged in columns (e.g., 1106, 1108, 1110 and 1112) and displayed on user interface 1102. User interface 1102 shows contextual information 1104 (e.g., "RECOMMENDED RESOURCES FOR YOU") including multimedia content (e.g., pictures, text, video, etc.). The contextual information arranged in columns (e.g., 1106, 1108, 1110 and 1112) may be customized based on user preferences (as explained previously).

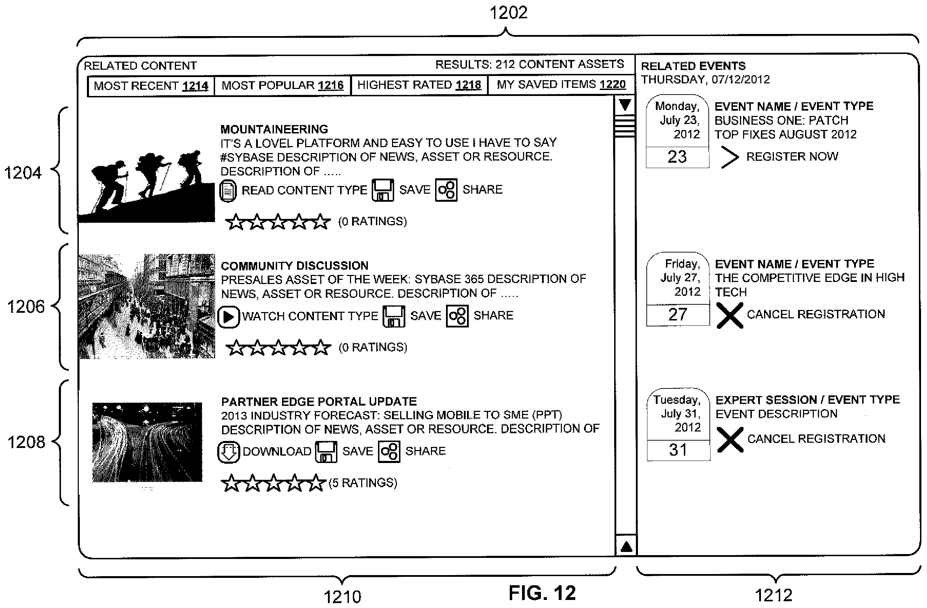

FIG. 12 is a block diagram illustrating a user interface displaying contextual information associated with data, according to an example. FIG. 12 shows user interface 1202 displaying contextual information (e.g., 1204, 1206 and 1208 that may categorized and accessed from tabs "most recent" 1214, "most popular" 1216, "highest rated" 1218, "my saved items" 1220, etc.) associated with the data. User interface 1202 shows contextual information 1210 and related events 1212. The contextual information including the related events 1212 may provide a facility to register and/or cancel registration for the event. A user has an option to read content (e.g., 1204), watch content (e.g., 1206, when content is multimedia type) or download content (e.g., 1208), etc. The contextual information (e.g., 1204, 1206 and 1208) may be saved or shared by clicking on the respective icon (e.g., SAVE, SHARE in 1204, 1206 and 1208).

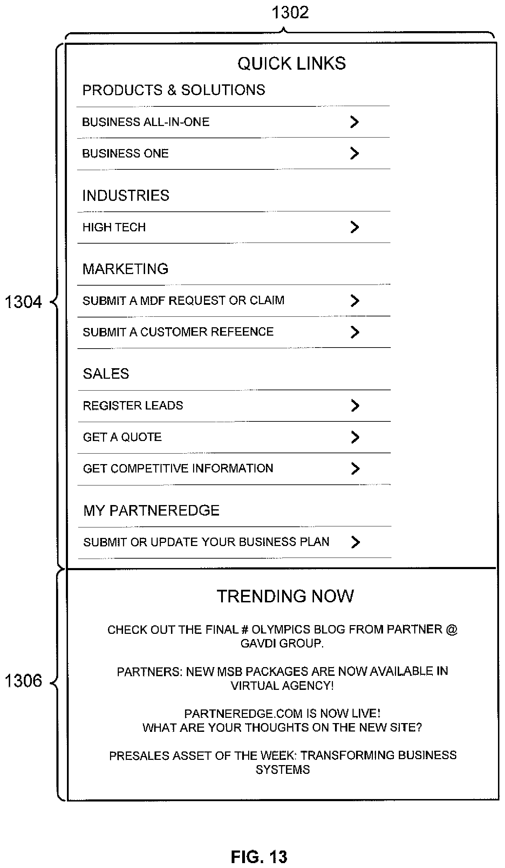

FIG. 13 is a block diagram illustrating a user interface displaying contextual information associated with data, according to an example. FIG. 13 shows user interface 1302 contextual information (e.g., 1304 and 1306) associated with data. The contextual information 1304 shows "QUICK LINKS" that may be used to navigate to the respective content (e.g., dashboards or user interfaces displaying the respective content). The contextual information 1306 includes "TRENDING NOW" that may display the latest and or popular updates related to events, launch of products, etc.

Some examples may include the above-described methods being written as one or more software components. These components, and the functionality associated with each, may be used by client, server, distributed, or peer computer systems. These components may be written in a computer language corresponding to one or more programming languages such as functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example examples may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. A computer readable storage medium may be a tangible computer readable storage medium. A computer readable storage medium may be a non-transitory computer readable storage medium. Examples of a non-transitory computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an example may be implemented using Java, C++, or other object-oriented programming language and development tools. Another example may be implemented in hard-wired circuitry in place of, or in combination with machine readable software instructions.

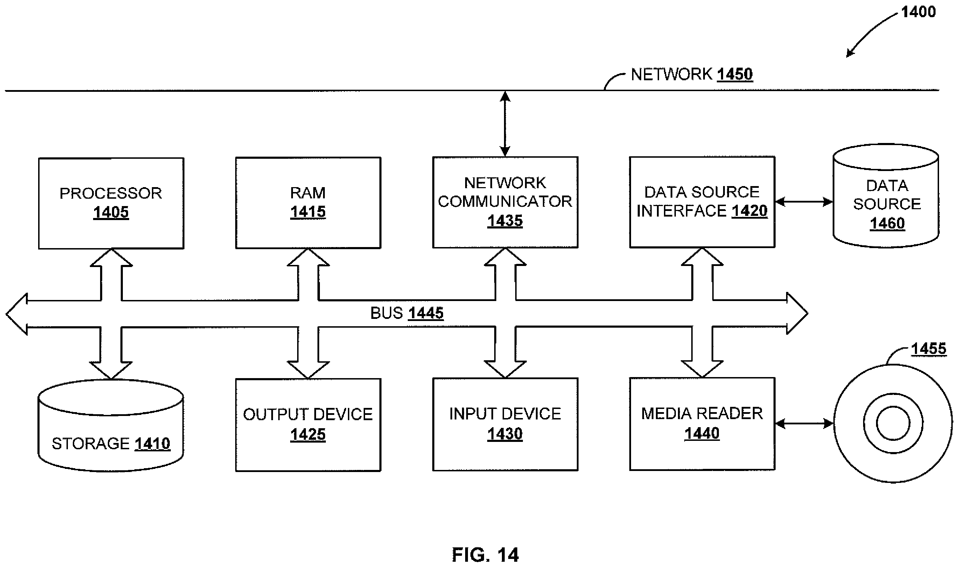

FIG. 14 is a block diagram of an exemplary computer system 1400, according to an example. Computer system 1400 includes processor 1405 that executes software instructions or code stored on computer readable storage medium 1455 to perform the above-illustrated methods. Processor 1405 can include a plurality of cores. Computer system 1400 includes media reader 1440 to read the instructions from computer readable storage medium 1455 and store the instructions in storage 1410 or in random access memory (RAM) 1415. Storage 1410 provides a large space for keeping static data where at least some instructions could be stored for later execution. According to some examples, such as some in-memory computing system examples, RAM 1415 can have sufficient storage capacity to store much of the data required for processing in RAM 1415 instead of in storage 1410. In some examples, all of the data required for processing may be stored in RAM 1415. The stored instructions may be further compiled to generate other representations of the instructions and dynamically stored in RAM 1415. Processor 1405 reads instructions from RAM 1415 and performs actions as instructed. According to one example, computer system 1400 further includes output device 1425 (e.g., a display) to provide at least some of the results of the execution as output including, but not limited to, visual information to users and input device 1430 to provide a user or another device with means for entering data and/or otherwise interact with computer system 1400. Each of these output devices 1425 and input devices 1430 could be joined by one or more additional peripherals to further expand the capabilities of computer system 1400. Network communicator 1435 may be provided to connect computer system 1400 to network 1450 and in turn to other devices connected to network 1450 including other clients, servers, data stores, and interfaces, for instance. The modules of computer system 1400 are interconnected via bus 1445. Computer system 1400 includes a data source interface 1420 to access data source 1460. Data source 1460 can be accessed via one or more abstraction layers implemented in hardware or software. For example, data source 1460 may be accessed by network 1450. In some examples data source 1460 may be accessed via an abstraction layer, such as a semantic layer.

A data source is an information resource. Data sources include sources of data that enable data storage and retrieval. Data sources may include databases, such as relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as Open Data Base Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of examples. One skilled in the relevant art will recognize, however that the examples can be practiced without one or more of the specific details or with other methods, components, techniques, etc. In other instances, well-known operations or structures are not shown or described in details.

Although the processes illustrated and described herein include series of steps, it will be appreciated that the different examples are not limited by the illustrated ordering of steps, as some steps may occur in different orders, some concurrently with other steps apart from that shown and described herein. In addition, not all illustrated steps may be required to implement a methodology in accordance with the one or more examples. Moreover, it will be appreciated that the processes may be implemented in association with the apparatus and systems illustrated and described herein as well as in association with other systems not illustrated.

The above descriptions and illustrations of examples, including what is described in the Abstract, is not intended to be exhaustive or to limit the one or more examples to the precise forms disclosed. While specific examples of, and examples for, the one or more examples are described herein for illustrative purposes, various equivalent modifications are possible within the scope, as those skilled in the relevant art will recognize. These modifications can be made in light of the above detailed description. Rather, the scope is to be determined by the following claims, which are to be interpreted in accordance with established doctrines of claim construction.

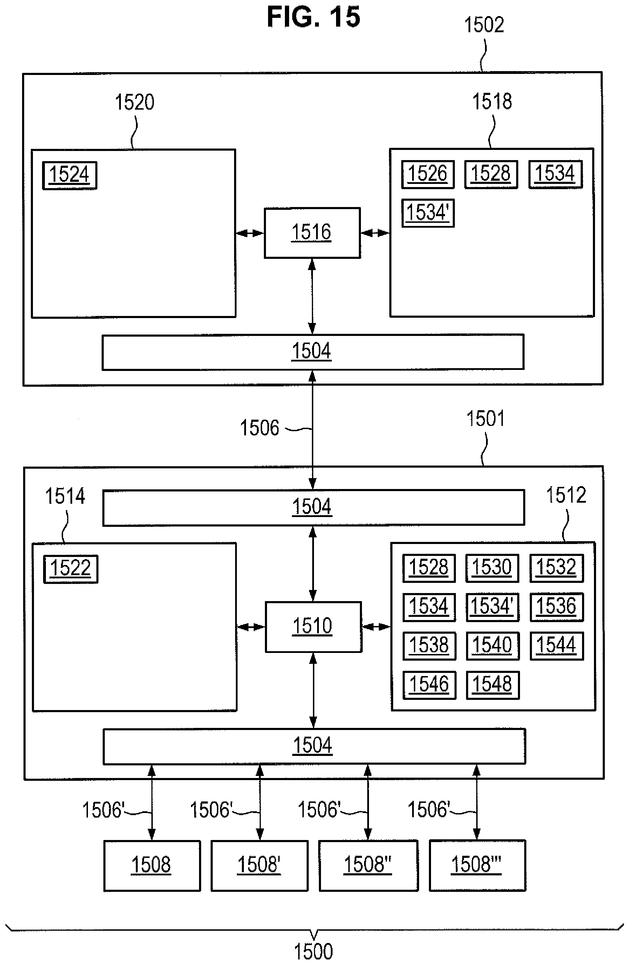

Fig. 15 shows an example of the communication system 1500. The communication system 1500 comprises a first computer system 1501 and a second computer system 1502. The first computer system 1501 and the second computer system 1502 each comprise at least one network adaptor 1504 for forming network connections 1506, 1506'. The network adaptors 1504 form a network connection 1506 that enables the first computer system 1501 to exchange data information with the second computer system 1502. The first computer system 1501 has also formed a number of network connections 1506 with external database systems 1508, 1508', 1508", 1508'''. The four external database systems shows are intended to arbitrarily represent two or more database systems.

The first computer system 1501 comprises a first processor 1510 that is in communication with the network adaptors 1504 as well as a first volatile memory 1512 and a first non-volatile memory 1514.

The second computer system 1502 comprises a second processor 1516 that is in communication with the network adaptor 1504 and a second volatile memory 1518 and a second non-volatile memory 1520.

The first non-volatile memory 1514 is shown as containing first machine-executable instructions 1522. The second non-volatile memory 1520 is shown as containing second machine-executable instructions 1524.

The second volatile memory 1518 is shown as containing an instance 1526 of an application caused by execution of the second machine-executable instructions 1524. The instance of an application 1526 generates a data request 1528. The data request 1528 is then pushed across the first network connection 1506 to the first volatile memory 1512. After receiving the data request 1528 the first machine-executable instructions 1522 cause the first processor 1510 to generate an initial database query 1530 for the database systems 1508, 1508', 1508", 1508'''. The first processor 1510 then sends the appropriate database query to each of the database systems 1508, 1508', 1508", 1508'''. Each of the database systems 1508, 1508', 1508", 1508'" may in turn respond with a portion of an initial query response 1532. The first machine-executable instructions 1522 contain a model which the first processor 1510 uses to map the initial query response 1532 into application data which is in the form of several blocks or pages 1534, 1534'.

Once the application data 1534, 1534' has been generated this is then pushed across the network connection 1506 and the second processor 1516 swaps these intro the second non-volatile memory 1518. In some examples the instance of the application 1526 also has the data model and knows which memory is stored in which location in the blocks 1534, 1534'. In other examples memory meta data may be transferred at the same time which the application 1526 uses to find the appropriate data. In some examples the memory meta data may be located within for example the application data 1534. The application 1526 then directly uses the application data 1534, 1534' by accessing the memory blocks 1534 and 1534'. The first processor 1510 then constructs using the first machine-executable instructions 1522 some query meta data 1536 that is descriptive of the initial database query 1530 and/or the initial query response 1532. This is then used to compare two journals of the database systems 1508, 1508', 1508", 1508'" to monitor if the databases 1508, 1508', 1508", 1508'" have changes which are relevant to the application data 1534, 1534'. If a relevant change is detected in one of the databases 1508, 1508', 1508", 1508"'then the first processor 1510 uses the machine-executable instructions 1522 and the query meta data 1536 to construct an updated database query 1538. This updated database query 1538 is then pushed out to the appropriate database or databases 1508, 1508', 1508", 1508'''. The first processor 1510 then receives the updated query response 1540 from one or more of the databases 1508, 1508', 1508", 1508'" and this is cached in the first volatile memory 1512.

The updated query response 1540 is then used with the memory model in the first machine-executable instructions 1522 to construct a replacement page 1544. The replacement page in this example 1544 corresponds to the initial page of application data 1534'. The first volatile memory 1512 is also shown as containing a set of encryption keys 1546 that for example can be used to encrypt any of the contents of the first volatile memory 1512. The first volatile memory 1512 is also shown as containing a set of certificate permissions 1548 that may be optionally created when the initial database query 1530 is received. If the database systems 1508, 1508', 1508", 1508'" require permissions to access data via database queries or to read journals it enables the first processor 1510 to continuously monitor changes in the database systems 1508, 1508', 1508", 1508'''.

The communication system 1500 is in some examples equivalent to the system illustrated in Fig. 3. The databases 308, 310, 312, and 314 may correspond to the databases 1508, 1508', 1508", 1508'''. The second computer system 1502 of Fig. 15 may correspond to elements 304, 304A, 304B, and 304C of Fig. 3. Some or all of the remaining components of Fig. 3 may be considered to be equivalent to the First computer system 1501 and the contents of its memory 1514 and 1512. For example the first machine executable instructions 1522 may be used to implement one or more of the remaining software components of Fig. 3

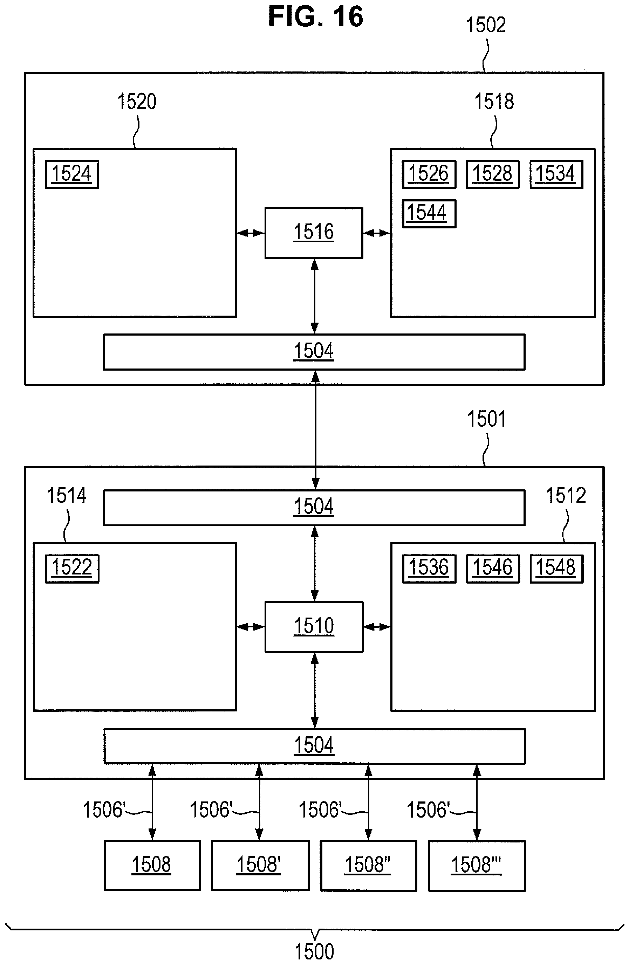

Fig. 16 shows the same database system 1500 after the first processor 1510 has pushed the replacement page 1544 across the network connection 1506 to the second processor 1516. When the replacement page 1544 was received the processor 1516 swapped the replacement page 1544 directly into the second volatile memory 1518 replacing the initial page of application data 1534'. The first volatile memory 1512 has also been in the meantime cleaned up. It can be seen that the first volatile memory 1512 in this instance only contains the query meta data 1536, the set of encryption keys 1546, and the certificate permissions 1548. The deletion of the other contents of the first volatile memory 1512 help to protect the system from unauthorized access to data.

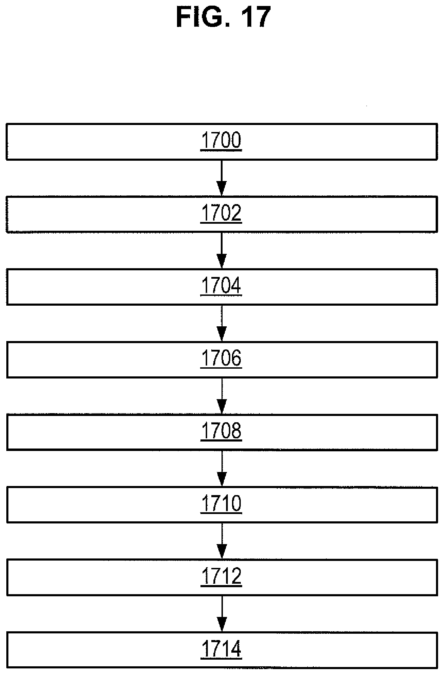

Fig. 17 shows a flowchart which illustrates a method of operating the communication system 1500 illustrated in Figs. 15 and 16. First in step 1700 the second processor 1516 generates a request 1528 for an instance of the application 1526. Next in step 1702 the second processor 1516 sends the data request 1528 to the first computer system 1501 or the first processor 1510 via the network connection 1506. Then in step 1704 the second processor generates an initial database query 1530 using the data request 1528. In step 1706 the first processor queries the two or more database systems 1508, 1508', 1508", 1508''' using the initial database query 1530. In step 1708 the first processor 1510 receives an initial query response 1532 from the two or more database systems 1508, 1508', 1508", 1508'" in response to the database query 1530. Next in step 1710 the first processor 1510 transforms the initial query response 1532 into application data. In this the application data is created using a memory model that maps the initial query response or responses into one or more initial pages 1534, 1534' of memory. Next in step 1712 the first processor 1510 pushes the application data 1534, 1534' across the network connection 1506 to the second processor 1516. Finally in step 1714 the second processor 1516 swaps the pages of application data 1534, 1534' directly into the second volatile memory 1518.

In the real world, database data is scattered across different systems which makes Information provisioning too slow due to the Fragmented infrastructure. There are general issues such as Fragmented experience, Limited localization and personalization, Unsatisfying search, Inconsistent Information, Inefficient User management and access rights, Insufficient reporting, Inefficient & manual content management processes.

It may be beneficial to build an Application where data can be fetched from multiple systems (without copying locally, Minimize Data transfer and Data Redundancy)which are scattered across different systems landscape, which should be User friendly, targeted high quality content, collaborative, innovative, and efficient. The Application could provide one consistent experience, role-based, regionalized, and personalized. Easy to search, quick to find, Social Media enabled interactive and private collaboration, Efficient content management processes and accelerated content distribution with high quality, Mobile-enabled, Enhanced identity management, with accurate permissions and authorizations, External content repository fed from internal and external sources via replication etc.

Examples may provide improved User Experience through an integrated and User-centric UI Application to support innovation, collaboration and productivity by fostering effectiveness, efficiency and satisfaction for Employees, Partners and Customers of an Enterprise. This provides an infrastructure to seamlessly integrate future acquisitions of an enterprise which supports to Simplify user interaction and collaboration for co-innovation.

Examples may provide for a solution architecture by which we can have the data from multiple systems in one Application UI and keep the Transactional systems in a Secure Network Zone.

Examples may have one or more of the following benefits:
- User friendliness
- to write new data intensive analytical applications, without regard to where the data resides, its type, quality, or size
- No data cloning locally
- capability to extract the required information (not data), from a variety of data sources
- Enables access to remote data access just like "local" table
- query processing to target data source as much as possible
- Supports data location agnostic development
- Improved Efficiency
- Better Decision Making
- Optimized Mass storage
- Minimize Data transfer and Data Redundancy
- Real-time insights across heterogeneous data sources
- Increase end user satisfaction due to easy access and personalized content
- Reduce response time for interactions / complete operational tasks
- Reduce time to find information/content
- Increase Growth/Scale
- Reduce time to impact revenue
- Increase revenue from direct and indirect sales
- Increase of business growth
- Increase Productivity
- Increase efficiency & quality
- Simplify & streamline time to publish content
- Increase transaction completion rate through self-service
- Increase score for target audience penetration
- Serves and enables users to successfully work together and be proactive in communicating, educating, and continuously providing information in a timely, accurate, relevant, consistent and cost efficient manner.

Examples may have one or more of the following features:
- Provides a personalized experience
- Find expertise and connect with other needed users
- sign up for Online Resources
- Social Media enabled interactive experience and private collaboration
- External content repository fed from internal and external sources via replication
- Easy to search, quick to find
- Mobile-enabled
- One consistent experience, role-based, regionalized, personalized
- Extended System Integration with SAP & non SAP systems, etc.
- Enhanced identity management, with accurate permissions and authorizations
- Support of various interaction levels
- Efficient content management processes and accelerated content distribution
- Intelligence through feedback (ratings) & web analytics

Examples may provide for an Adapter Framework such as is illustrated in Fig. 3 as element 306D. It is the entry point for all interactions with the Data Provisioning subsystem expressed as a set of API in the form of System Stored Procedures. The API works as a proxy to direct the calls to the different systems to complete the task. It provides a common set of API/interface for applications to interact with external sources.
- Identify external sources.
- Establish connection to external sources.
- Browse and import metadata (get a list of tables) from an external source.
- Support data access of various formats.

A data Provisioning Component may for example be provided for in examples as is illustrated in Fig. 3 element 306F: It provides out-of-the-box native connectivity for different sources and it has different subcomponents like below:
∘ Change Data Services
∘ Change Data Adapter
∘ Data Access Service
   - Change Data Adapter (306F2) reads Database logs and streams the data to Data Provisioning Component. Its function is to support real-time Change Data Capture (CDC) for database sources.
   - Change Data Services (306F1) reads database log and forwards the data extracted from DDL and DML to the Change Data Adapter component. In general, log readers understand the underlying database log format and are responsible for converting the database specific log changes.
   - Data Access Service (306F3) is responsible for applying the changes to the target working in tandem with the Change Data Services to support real-time data capture and replication. It receives transactions from the Change Data Services in sorted commit order. It manages the connection to DB and keeps track of the last committed/rolled-back/skipped transactions. It identifies the optimal ways to send the transactions by:
      - Grouping smaller transactions into larger ones
      - Aggregating the change messages into the minimal set of commands for table type targets
      - Applying database specific optimization

### Change Data Store (306F4):

Change Data Services may possibly persist the change data in case it is consumed by different consumers at different speeds or in case the target table is temporarily locked for other operations.

### Resultset Convertor:

This component helps in converting the data in Schema-free JSON document model so that it helps in interactive analysis and support to join data from multiple data stores by enabling Pluggable architecture & support connectivity to multiple data stores which is extremely user and developer friendly.

### Metadata Manager:

The Metadata layer manages the Metadata component which has the Data source definitions, consumer details, Virtual table definitions etc.

### Federation Framework (306A):

It helps in connecting to different remote data sources and executing the query in the remote data source which means Federation into the database layer with Optimized access to remote data.

The above described approach may have one or more of the following advantages
- Unification of Design & Architecture across Applications
- No data copying locally, Minimize Data transfer and Data Redundancy
- Enables access to remote data access just like "local" table
- Supports data location agnostic development
- Easier to use and maintain
- Reuse of existing UI applications (or parts of them)
- Unification for look-and-feel of user interface across different systems
- consistent across all applications in different SAP & non SAP systems
- Built-in features (for example authorization, country/role-dependent layout, Message Handling ...)
- Easy for less experienced programmers and help programmers to quick-start development
- Performance optimized
- Translation support
- Values restricted based on User Authorization
- Reuse of existing values

### List of reference numerals

- 1500: communication system
- 1501: first computer system
- 1502: second computer system
- 1504: network adaptor
- 1506: network connection
- 1506': network connection
- 1508: database system
- 1508': database system
- 1508": database system
- 1508'": database system
- 1510: first processor
- 1512: first volatile memory
- 1514: first non-volatile memory
- 1516: second processor
- 1518: second volatile memory
- 1520: second non-volatile memory
- 1522: first machine executable instructions
- 1524: second machine executable instructions
- 1526: instance of an application
- 1528: data request
- 1530: initial database query
- 1532: initial query response
- 1534: initial page of application data
- 1534': initial page of application data
- 1536: query metadata
- 1538: updated database query
- 1540: updated query response
- 1544: replacement page of application data
- 1546: set of encryption keys
- 1548: certificate permissions
- 1700: generate a data request for application data for an instance of the application
- 1702: send the data request to the first computer system via the network connection
- 1704: generate an initial database query using the data request
- 1706: query the two or more database systems using the initial database query
- 1708: receive an initial query response from the two or more database systems in response to the database query
- 1710: transform the initial query response into the application data using a memory model
- 1712: push the application data across the network connection to the second processor
- 1714: swap the one or more initial pages of memory into the second volatile memory upon reception via the network connection

## Claims

1. A communication system (1500) comprising:
- a first computer system (104, 1501) with a first processor (1510), wherein the first computer system comprises a first volatile memory (1512), wherein the first computer system comprises first machine executable instructions (1522) configured for implementing a real-time database transactional system, wherein the real-time database transactional system is further configured for connecting to two or more database systems (308, 310, 312, 314, 1508, 1508', 1508", 1508"');
- a second computer system (1502) with a second processor (1516), wherein the second computer system comprises a second volatile memory (1518), wherein the second computer system comprises second machine executable instructions (1524) for execution by the second processor to implement an application (102, 1526);
- a network connection (1506) between the second computer system and the first computer system;
wherein execution of the second machine executable instructions cause the second processor to: generate (1700) a data request (1528) for application data for an instance of the application and send (1702) the data request to the first computer system via the network connection;
wherein execution of the first machine executable instructions cause the first processor to:
- generate (1704) an initial database query (1530) using the data request;
- query (1706) the two or more database systems using the initial database query;
- receive (1708) an initial query response (1532) from the two or more database systems in response to the database query;
- transform (1710) the initial query response into the application data using a memory model, wherein the memory model is configured for formatting the application data as one or more initial pages (1524, 1534') of memory, wherein the one or more initial pages have a predetermined size, wherein the one or more initial pages each comprise an identifier or a code; and
- push (1712) the application data across the network connection to the second processor; and
wherein execution of the second machine executable instructions cause the second processor to swap (1714) the one or more initial pages of memory into the second volatile memory to replace existing pages of memory upon reception via the network connection, wherein the second processor is configured for selecting the existing pages of memory to replace using the identifier or the code of the one or more initial pages.

2. The communication system of claim 1, wherein execution of the first machine executable instructions further cause the processor to generate memory metadata descriptive of the application data, wherein execution of the first machine executable instructions further causes the first processor to push the memory metadata across the network connection to the second processor with the application data.

3. The communication system of claim 1 or 2, wherein execution of the first machine executable instructions further causes the processor to delete the application data from the first volatile memory after pushing it across the network connection.

4. The communication system of claim 3, wherein execution of the first machine executable instructions further causes the first processor to:
- store query metadata (1536) descriptive of the initial database query and/or the initial query response in the first volatile memory;
- scan modification journals of the two or more database systems using the query metadata to identify modification data descriptive of the initial query response;
- generate an updated database query (1538) using the modification data;
- query the two or more database systems using the updated database query;
- receive an updated query response (1540) from the two or more database systems in response to the updated database query;
- generate replacement data (1544) for replacing at least a portion of the application data using the updated query response using the memory model;
- push the replacement data across the network connection into the second volatile memory to replace the portion of the application data in the second volatile memory; and
- update the query metadata in the first volatile memory using the updated query response and/or the updated database query; and
wherein execution of the second machine executable instructions further causes the second processor to swap the one or more replacement pages into the second volatile memory to replace the at least a portion of the application data.

5. The communication system of claim 4, wherein execution of the first machine executable instructions further causes the processor to delete the replacement data from the first volatile memory after pushing the replacement data across the network connection.

6. The communication system of claim 4 or 5, wherein the replacement data is generated as one or more replacement pages (1544) using the memory model, and wherein the one or more replacement pages replace the one or more initial pages, wherein execution of the first machine executable instructions further cause the processor to update the memory metadata when generating the replacement data, where execution of the first machine executable instructions further causes the first processor to push the memory metadata across the network connection to the second processor with the replacement data.

7. The communication system of any one of claims 3 through 6, wherein the execution of the first machine executable instructions further cause the processor to dynamically generate a certificate permission (1548) for each of the two or more database systems, wherein the first processor queries the two or more database systems using the certificate permission for each of the two or more database systems, wherein the certificate permission for each of the two or more database systems is cached in the first volatile memory.

8. The communication system of any one of claims 3 through 7, wherein the initial query response and the updated query response are received as response portions from each of the two or more database systems individually, wherein the response portions are cached in the first volatile memory.

9. The communication system of claim 8, wherein any one of the following are encrypted using an encryption algorithm before storage in the first volatile memory: the response portions, the initial query response, the updated query response, the query metadata, the certificate permission for each of the two or more database systems, and combinations thereof.

10. The communication system of claim 9, wherein the encryption algorithm is configured for encrypting data in alternating data blocks (410, 416, 420, 424), wherein each of the alternating data blocks is encrypted in a predetermined sequence with one of a group of encryption keys (402, 404, 1546), wherein each of the separate encryption key is cached in the first volatile memory.

11. The communication system of claim 10, wherein execution of the first machine executable instructions causes the first processor to decrypt the alternating data blocks using the one of the group of encryption keys according to the predetermined sequence.

12. The communication system of any one of any one of the preceding claims , wherein execution of the second machine executable instructions further cause the second processor to terminate the instance of the application, wherein execution of the second machine executable instructions further causes the second processor to send an application closed message to the first processor via network connection during termination of the instance of the application, wherein execution of the first machine executable instructions further cause the first processor to clear the first volatile memory.

13. A computer readable storage medium (1514) containing first machine executable instructions (1522) for execution by a first processor (1510) of a first computer system (1501), wherein the first computer system comprises a first volatile memory (1512), wherein the first machine executable instructions are configured for implementing a real-time database transactional system, wherein the real-time database transactional system is further configured for connecting to two or more database systems (308, 310, 312, 314, 1508, 1508', 1508", 1508"'), wherein the first computer system is configured for connecting to a network connection (1506); wherein execution of the first machine executable instructions cause the first processor to:
- generate (1704) an initial database query using a data request received (1702) from the second computer system via the network connection;
- query (1706) the two or more database systems using the initial database query;
- receive (1708) an initial query response (1532) from the two or more database systems in response to the database query;
- transform (1710) the initial query response into application data (1534, 1534') using a memory model, wherein the memory model is configured for formatting the application data as one or more initial pages (1534, 1534') of memory, wherein the one or more initial pages have a predetermined size, wherein the one or more initial pages each comprise an identifier or a code; and
- push (1712) the application data across the network connection into a second volatile memory (1518) of the second computer system.

14. A communication method between a first computer system (1501) and a second computer system (1502) using a network connection (1506), wherein the first computer system comprises a first processor (1510), wherein the first computer system comprises a first volatile memory (1514), wherein the first computer system comprises first machine executable instructions (1522) configured for implementing a real-time database transactional system, wherein the real-time database transactional system is further configured for connecting to two or more database systems (308, 310, 312, 314, 1508, 1508', 1508", 1508'"), wherein the second computer system comprises a second processor (1516), wherein the second computer system comprises a second volatile memory (1518), wherein the second computer system comprises second machine executable instructions (1524) for execution by the second processor to implement an application (1526),
wherein the method comprises:
- generating (1700) a data request (1528) for application data (1534, 1534') for an instance of the application by the second processor;
- sending (1702) the data request to the first computer system by the second processor via the network connection;
- generating (1704) an initial database query (1530) using the data request by the first processor;
- querying (1706) the two or more database systems using the initial database query by the first processor;
- receiving (1708) an initial query response (1532) from the two or more database systems in response to the database query by the first processor;
- transforming (1710) the initial query response into the application data using a memory model, wherein the memory model is configured for formatting the application data as one or more initial pages (1534, 1534') of memory by the first processor, wherein the one or more initial pages have a predetermined size, wherein the one or more initial pages each comprise an identifier or a code;
- pushing (1712) the application data across the network connection by the first processor; and
- swapping (1714) the application data into the second volatile memory by the second processor to replace existing pages of memory, wherein the second processor is configured for selecting the existing pages of memory to replace using the identifier or the code of the one or more initial pages.

## Patentansprüche

1. Kommunikationssystem (1500), umfassend:
- ein erstes Computersystem (104, 1501) mit einem ersten Prozessor (1510), wobei das erste Computersystem einen ersten flüchtigen Speicher (1512) umfasst, wobei das erste Computersystem erste maschinenausführbare Befehle (1522) umfasst, die dafür ausgelegt sind, ein Echtzeit-Datenbanktransaktionssystem zu implementieren, wobei das Echtzeit-Datenbanktransaktionssystem ferner für eine Verbindung mit zwei oder mehr Datenbanksystemen (308, 310, 312, 314, 1508, 1508', 1508'', 1508"') ausgelegt ist;
- ein zweites Computersystem (1502) mit einem zweiten Prozessor (1516), wobei das zweite Computersystem einen zweiten flüchtigen Speicher (1518) umfasst, wobei das zweite Computersystem zweite maschinenausführbare Befehle (1524) zur Ausführung durch den zweiten Prozessor umfasst, um eine Anwendung (102, 1526) zu implementieren;
- eine Netzverbindung (1506) zwischen dem zweiten Computersystem und dem ersten Computersystem;
wobei die Ausführung der zweiten maschinenausführbaren Befehle den zweiten Prozessor veranlasst zum: Erzeugen (1700) einer Datenanforderung (1528) für Anwendungsdaten für eine Instanz der Anwendung und Senden (1702) der Datenanforderung über die Netzverbindung an das erst Computersystem;
wobei die Ausführung der ersten maschinenausführbaren Befehle den ersten Prozessor veranlasst zum:
- Erzeugen (1704) einer ersten Datenbankabfrage (1530) unter Verwendung der Datenanforderung;
- Abfragen (1706) der zwei oder mehr Datenbanksysteme unter Verwendung der ursprünglichen Datenbankabfrage;
- Empfangen (1708) einer ursprünglichen Abfragebeantwortung (1532) aus den zwei oder mehr Datenbanksystemen als Beantwortung der Datenbankabfrage;
- Umwandeln (1710) der ursprünglichen Abfragebeantwortung in die Anwendungsdaten unter Verwendung eines Speichermodells, wobei das Speichermodell dafür ausgelegt ist, die Anwendungsdaten als mindestens eine ursprüngliche Seite (1524, 1534') eines Speichers zu formatieren, wobei die mindestens eine ursprüngliche Seite eine vorgegebene Größe aufweist, wobei die mindestens eine ursprüngliche Seite jeweils eine Kennung oder einen Code umfasst; und
- Push-Übertragen (1712) der Anwendungsdaten über die Netzverbindung auf den zweiten Prozessor; und
wobei die Ausführung der zweiten maschinenausführbaren Befehle bewirkt, dass der zweite Prozessor (1714) die mindestens eine ursprüngliche Seite des Speichers nach einem Empfang über die Netzverbindung in den zweiten flüchtigen Speicher einwechselt, um vorhandene Seiten des Speichers auszutauschen, wobei der zweite Prozessor dafür ausgelegt ist, die vorhandenen Seiten des Speichers, die ausgetauscht werden sollen, unter Verwendung der Kennung oder des Codes der mindestens einen ursprünglichen Seite auszuwählen.

2. Kommunikationssystem nach Anspruch 1, wobei die Ausführung der ersten maschinenausführbaren Befehle ferner bewirkt, dass der Prozessor Speichermetadaten erzeugt, die beschreibend sind für die Anwendungsdaten, wobei die Ausführung der ersten maschinenausführbaren Befehle ferner bewirkt, dass der erste Prozessor über die Netzverbindung eine Push-Übertragung der Speichermetadaten mit den Anwendungsdaten auf den zweiten Prozessor vornimmt.

3. Kommunikationssystem nach Anspruch 1 oder 2, wobei die Ausführung der ersten maschinenausführbaren Befehle ferner bewirkt, dass der Prozessor die Anwendungsdaten aus dem ersten flüchtigen Speicher löscht, nachdem er ihre Push-Übertragung über die Netzverbindung vorgenommen hat.

4. Kommunikationssystem nach Anspruch 3, wobei die Ausführung der ersten maschinenausführbaren Befehle ferner den ersten Prozessor veranlasst zum:
- Speichern von Abfragemetadaten (1536), die beschreibend sind für die ursprüngliche Datenbankabfrage und/oder die ursprüngliche Abfragebeantwortung, im ersten flüchtigen Speicher;
- Durchsuchen von Modifikationsprotokollen der zwei oder mehr Datenbanksysteme unter Verwendung der Abfragemetadaten, um Modifikationsdaten zu identifizieren, die beschreibend sind für die ursprüngliche Abfragebeantwortung;
- Erzeugen einer aktualisierten Datenbankabfrage (1538) unter Verwendung der Modifikationsdaten;
- Abfragen der zwei oder mehr Datenbanksysteme unter Verwendung der aktualisierten Datenbankabfrage;
- Empfangen einer aktualisierten Abfragebeantwortung (1540) aus den zwei oder mehr Datenbanksystemen als Beantwortung der aktualisierten Datenbankabfrage;
- Erzeugen von Austauschdaten (1544) zum Austauschen von zumindest einem Teil der Anwendungsdaten unter Verwendung der aktualisierten Abfragebeantwortung unter Verwendung des Speichermodells;
- Push-Übertragen der Austauschdaten über die Netzverbindung in den zweiten flüchtigen Speicher, um den Teil der Anwendungsdaten im zweiten flüchtigen Speicher auszutauschen; und
- Aktualisieren der Abfragemetadaten im ursprünglichen flüchtigen Speicher unter Verwendung der aktualisierten Abfragebeantwortung und/oder der aktualisierten Datenbankabfrage; und
wobei die Ausführung der zweiten maschinenausführbaren Befehle ferner den zweiten Prozessor veranlasst, die mindestens eine Austauschseite in den zweiten flüchtigen Speicher einzuwechseln, um zumindest den Teil der Anwendungsdaten auszutauschen.

5. Kommunikationssystem nach Anspruch 4, wobei die Ausführung der ersten maschinenausführbaren Befehle ferner bewirkt, dass der Prozessor die Austauschdaten aus dem ursprünglichen flüchtigen Speicher löscht, nachdem er eine Push-Übertragung der Austauschdaten über die Netzverbindung vorgenommen hat.

6. Kommunikationssystem nach Anspruch 4 oder 5, wobei die Austauschdaten unter Verwendung des Speichermodells als mindestens eine Austauschseite (1544) erzeugt werden, und wobei die mindestens eine Austauschseite die mindestens eine ursprüngliche Seite ersetzt, wobei die Ausführung der ersten maschinenausführbaren Befehle ferner den Prozessor veranlasst, die Speichermetadaten zu aktualisieren, wenn die Austauschdaten erzeugt werden, wobei die Ausführung der ersten maschinenausführbaren Befehle ferner den ersten Prozessor veranlasst, über die Netzverbindung eine Push-Übertragung der Speichermetadaten mit den Austauschdaten auf den zweiten Prozessor vorzunehmen.

7. Kommunikationssystem nach einem der Ansprüche 3 bis 6, wobei die Ausführung der ersten maschinenausführbaren Befehle ferner den Prozessor veranlasst, auf dynamische Weise eine Zertifikatzulassung (1548) für jedes von den zwei oder mehr Datenbanksystemen zu erzeugen, wobei der erste Prozessor die zwei oder mehr Datenbanksysteme unter Verwendung der Zertifikatzulassung für jedes von den zwei oder mehr Datenbanksystemen abfragt, wobei die Zertifikatzulassung für jedes von den zwei oder mehr Datenbanksystemen im ersten flüchtigen Speicher zwischengespeichert wird.

8. Kommunikationssystem nach einem der Ansprüche 3 bis 7, wobei die ursprüngliche Abfragebeantwortung und die aktualisierte Abfragebeantwortung als Antwortteile von jedem der zwei oder mehr Datenbanksysteme individuell empfangen wird, wobei die Antwortteile im ersten flüchtigen Speicher zwischengespeichert werden.

9. Kommunikationssystem nach Anspruch 8, wobei irgendeine oder irgendwelche der folgenden unter Verwendung eines Verschlüsselungsalgorithmus vor der Speicherung im ursprünglichen flüchtigen Speicher verschlüsselt werden: die Antwortteile, die ursprüngliche Abfragebeantwortung, die aktualisierte Abfragebeantwortung, die Abfragemetadaten, die Zertifikatzulassung für jedes von den zwei oder mehr Datenbanksystemen und Kombinationen davon.

10. Kommunikationssystem nach Anspruch 9, wobei der Verschlüsselungsalgorithmus zum Verschlüsseln von Daten in einander abwechselnden Datenblöcken (410, 416, 420, 424) konfiguriert ist, wobei jeder von den einander abwechselnden Datenblöcken in einer vorgegebenen Sequenz mit einer von einer Gruppe von Verschlüsselungscodes (402, 404, 1546) verschlüsselt wird, wobei jeder von den separaten Verschlüsselungscodes im ursprünglichen flüchtigen Speicher zwischengespeichert wird.

11. Kommunikationssystem nach Anspruch 10, wobei die Ausführung der ersten maschinenausführbaren Befehle bewirkt, dass der erste Prozessor die einander abwechselnden Datenblöcke unter Verwendung des einen von der Gruppe von Verschlüsselungscodes gemäß der vorgegebenen Sequenz blockiert.

12. Kommunikationssystem nach einem der vorangehenden Ansprüche, wobei die Ausführung der zweiten maschinenausführbaren Befehle ferner bewirkt, dass der zweite Prozessor die Instanz der Anwendung beendet, wobei die Ausführung der zweiten maschinenausführbaren Befehle ferner bewirkt, dass der zweite Prozessor während der Beendigung der Instanz der Anwendung eine Anwendungsschließungsnachricht über eine Netzverbindung an den ersten Prozessor sendet, wobei die Ausführung der ersten maschinenausführbaren Befehle ferner bewirkt, dass der erste Prozessor den ersten flüchtigen Speicher leert.

13. Computerlesbares Speichermedium (1514), das erste maschinenausführbare Befehle (1522) zur Ausführung durch einen ersten Prozessor (1510) eines ersten Computersystems (1501) enthält, wobei das erste Computersystem einen ersten flüchtigen Speicher (1512) umfasst, wobei die ersten maschinenausführbaren Befehle dafür ausgelegt sind, ein Echtzeit-Datenbanktransaktionssystem zu implementieren, wobei das Echtzeit-Datenbanktransaktionssystem ferner für eine Verbindung mit zwei oder mehr Datenbanksystemen (308, 310, 312, 314, 1508, 1508', 1508", 1508'") ausgelegt ist, wobei das erste Computersystem für eine Verbindung mit einer Netzverbindung (1506) ausgelegt ist; wobei die Ausführung der ersten maschinenausführbaren Befehle den ersten Prozessor veranlasst zum:
- Erzeugen (1704) einer ursprünglichen Datenbankabfrage unter Verwendung einer aus dem zweiten Computersystem über die Netzverbindung empfangenen (1702) Datenabfrage;
- Abfragen (1706) der zwei oder mehr Datenbanksysteme unter Verwendung der ursprünglichen Datenbankabfrage;
- Empfangen (1708) einer ursprünglichen Abfragebeantwortung (1532) aus den zwei oder mehr Datenbanksystemen als Beantwortung der Datenbankabfrage;
- Umwandeln (1710) der ursprünglichen Abfragebeantwortung in Anwendungsdaten (1534, 1534') unter Verwendung eines Speichermodells, wobei das Speichermodell dafür ausgelegt ist, die Anwendungsdaten als mindestens eine ursprüngliche Seite (1534, 1534') eines Speichers zu formatieren, wobei die mindestens eine ursprüngliche Seite eine vorgegebene Größe aufweist, wobei die mindestens eine ursprüngliche Seite jeweils eine Kennung oder einen Code umfasst; und
- Push-Übertragen (1712) der Anwendungsdaten über die Netzverbindung auf einen zweiten flüchtigen Speicher (1518) des zweiten Computersystems.

14. Kommunikationsverfahren zwischen einem ersten Computersystem (1501) und einem zweiten Computersystem (1502) unter Verwendung einer Netzverbindung (1506), wobei das erste Computersystem einen ersten Prozessor (1510) umfasst, wobei das erste Computersystem einen ersten flüchtigen Speicher (1514) umfasst, wobei das erste Computersystem erste maschinenausführbare Befehle (1522) umfasst, die dafür ausgelegt sind, ein Echtzeit-Datenbanktransaktionssystem zu implementieren, wobei das Echtzeit-Datenbanktransaktionssystem für eine Verbindung mit zwei oder mehr Datenbanksystemen (308, 310, 312, 314, 1508, 1508', 1508'', 1508'") ausgelegt ist, wobei das zweite Computersystem einen zweiten Prozessor (1516) umfasst, wobei das zweite Computersystem einen zweiten flüchtigen Speicher (1518) umfasst, wobei das zweite Computersystem zweite maschinenausführbare Befehle (1524) zur Ausführung durch den zweiten Prozessor umfasst, um eine Anwendung (1526) zu implementieren, wobei das Verfahren umfasst:
- Erzeugen (1700) einer Datenanforderung (1528) für Anwendungsdaten (1534, 1534') für eine Instanz der Anwendung durch den zweiten Prozessor;
- Senden (1702) der Datenanforderung an das erste Computersystem durch den zweiten Prozessor über die Netzverbindung;
- Erzeugen (1704) einer ursprünglichen Datenbankabfrage (1530) unter Verwendung der Datenanforderung durch den ursprünglichen Prozessor;
- Abfragen (1706) der zwei oder mehr Datenbanksysteme unter Verwendung der ursprünglichen Datenbankabfrage durch den ersten Prozessor;
- Empfangen (1708) einer ursprünglichen Abfragebeantwortung (1532) aus den zwei oder mehr Datenbanksystemen als Beantwortung der Datenbankabfrage durch den ersten Prozessor;
- Umwandeln (1710) der ursprünglichen Abfragebeantwortung in die Anwendungsdaten unter Verwendung eines Speichermodells durch den ersten Prozessor, wobei das Speichermodell dafür ausgelegt ist, die Anwendungsdaten als mindestens eine ursprüngliche Seite (1534, 1534') eines Speichers zu formatieren, wobei die mindestens eine ursprüngliche Seite eine vorgegebene Größe aufweist, wobei die mindestens eine ursprüngliche Seite jeweils eine Kennung oder einen Code umfasst;
- Push-Übertragen (1712) der Anwendungsdaten durch den zweiten Prozessor über die Netzverbindung; und
- Einwechseln (1714) der Anwendungsdaten in den zweiten flüchtiger Speicher durch den zweiten Prozessor, um vorhandene Seiten des Speichers auszutauschen, wobei der zweite Prozessor dafür ausgelegt ist, die auszutauschenden vorhandenen Seiten des Speichers unter Verwendung der Kennung oder des Codes der einen oder der mehreren ursprünglichen Seiten auszuwählen.

## Revendications

1. Système de communication (1500) comprenant :
- un premier système informatique (104, 1501) avec un premier processeur (1510), où le premier système informatique comprend une première mémoire volatile (1512), où le premier système informatique comprend des premières instructions exécutables par machine (1522) conçues pour mettre en œuvre un système transactionnel de base de données en temps réel, où le système transactionnel de base de données en temps réel est en outre conçu pour se connecter à deux ou à plusieurs systèmes de bases de données (308, 310, 312, 314, 1508, 1508', 1508", 1508'") ;
- un deuxième système informatique (1502) avec un deuxième processeur (1516), où le deuxième système informatique comprend une deuxième mémoire volatile (1518), où le deuxième système informatique comprend des deuxièmes instructions exécutables par machine (1524) pour l'exécution d'une mise en œuvre d'une application (102, 1526) par le deuxième processeur ;
- une connexion réseau (1506) entre le deuxième système informatique et le premier système informatique ;
dans lequel l'exécution des deuxièmes instructions exécutables par machine fait en sorte que le deuxième processeur : génère (1700) une interrogation de données (1528) pour une donnée d'application pour une instance de l'application et envoie (1702) l'interrogation de donnée au premier système informatique par le biais de la connexion réseau ;
dans lequel l'exécution des premières instructions exécutables par machine fait en sorte que le premier processeur :
- génère (1704) une interrogation de base de données initiale (1530) en utilisant l'interrogation de données ;
- interroge (1706) les deux ou plusieurs systèmes de bases de données en utilisant l'interrogation de base de données initiale ;
- reçoive (1708) une réponse à l'interrogation initiale (1532) à partir des deux ou plusieurs systèmes de bases de données en réponse à l'interrogation de base de données ;
- transforme (1710) la réponse à l'interrogation initiale en donnée d'application en utilisant un modèle de mémoire, où le modèle de mémoire est conçu pour formater la donnée d'application sous forme d'une ou de plusieurs pages initiales (1524, 1534') de mémoire, où la ou les pages initiales ont une taille prédéterminée, où la ou les pages initiales comprennent chacune un identifieur ou un code ; et
- pousser (1712) la donnée d'application à travers la connexion réseau jusqu'au deuxième processeur ; et
dans lequel l'exécution des deuxièmes instructions exécutables par machine fait en sorte que le deuxième processeur échange (1714) la ou les pages initiales de mémoire dans la deuxième mémoire volatile pour remplacer des pages existantes de mémoire lors de la réception par le biais de la connexion réseau, où le deuxième processeur est conçu pour sélectionner les pages de mémoire existantes à remplacer en utilisant l'identifieur ou le code de la ou des pages initiales.

2. Système de communication selon la revendication 1, dans lequel l'exécution des premières instructions exécutables par machine fait en outre en sorte que le processeur génère des métadonnées de mémoire descriptrices de la donnée d'application, dans lequel l'exécution des premières instructions exécutables par machine fait en outre en sorte que le premier processeur pousse les métadonnées de mémoire à travers la connexion réseau jusqu'au deuxième processeur avec la donnée d'application.

3. Système de communication selon la revendication 1 ou la revendication 2, dans lequel l'exécution des premières instructions exécutables par machine fait en outre en sorte que le processeur efface les données d'application de la première mémoire volatile après les avoir poussées à travers la connexion réseau.

4. Système de communication selon la revendication 3, dans lequel l'exécution des premières instructions exécutables par machine fait en outre en sorte que le premier processeur :
- stocke des métadonnées d'interrogation (1536) descriptrices de l'interrogation de base de données initiale et/ou la réponse à l'interrogation initiale dans la première mémoire volatile ;
- balaye des journaux de modification des deux ou plusieurs systèmes de bases de données en utilisant la métadonnée d'interrogation pour identifier une donnée de modification descriptrice de la réponse à l'interrogation initiale ;
- génère une interrogation de base de données mise à jour (1538) en utilisant les données de modification ;
- interroge les deux ou plusieurs systèmes de bases de données en utilisant l'interrogation de base de donnée mise à jour ;
- reçoive une réponse à l'interrogation mise à jour (1540) à partir des deux ou plusieurs systèmes de bases de données en réponse à l'interrogation de base de données mise à jour ;
- génère des données de remplacement (1544) pour remplacer au moins une partie des données d'application en utilisant la réponse à l'interrogation mise à jour en utilisant le modèle de mémoire ;
- pousse les données de remplacement à travers la connexion réseau dans la deuxième mémoire volatile afin de remplacer la partie des données d'application dans la deuxième mémoire volatile ; et
- met à jour les métadonnées d'interrogation dans la première mémoire volatile en utilisant la réponse à l'interrogation et/ou l'interrogation de la base de données mise à jour ; et dans lequel l'exécution des deuxièmes instructions exécutables par machine fait en outre que le deuxième processeur échange la ou les pages de remplacement dans la deuxième mémoire volatile afin de remplacer l'au moins une partie des données d'application.

5. Système de communication selon la revendication 4, dans lequel l'exécution des premières instructions exécutables par machine fait en outre en sorte que le processeur efface les données de remplacement à partir de la première mémoire volatile après avoir poussé les données de remplacement à travers la connexion réseau.

6. Système de communication selon la revendication 4 ou la revendication 5, dans lequel les données de remplacement sont générées sous forme d'une ou de plusieurs pages de remplacement (1544) en utilisant le modèle de mémoire, et dans lequel la ou les pages de remplacement remplacent la ou les pages initiales, dans lequel l'exécution des première instructions exécutables par machine fait en outre en sorte que le processeur mette à jour les métadonnées de mémoire lors de la génération des données de remplacement, dans lequel l'exécution des premières instructions exécutables par machine fait en outre en sorte que le premier processeur pousse les métadonnées de mémoire à travers la connexion réseau jusqu'au deuxième processeur avec les données de remplacement.

7. Système de communication selon l'une quelconque des revendications 3 à 6, dans lequel l'exécution des premières instructions exécutables par machine fait en outre en sorte que le processeur génère de manière dynamique une permission de certificat (1548) pour chacun des deux ou plusieurs systèmes de bases de données, dans lequel le processeur interroge les deux ou plusieurs systèmes de bases de données en utilisant la permission de certificat pour chacun des deux ou plusieurs systèmes de bases de données, dans lequel la permission de certificat pour chacun des deux ou plusieurs systèmes de bases de données est cachée dans la première mémoire volatile.

8. Système de communication selon l'une quelconque des revendications 3 à 7, dans lequel la réponse à l'interrogation initiale et la réponse à l'interrogation mise à jour sont reçues de manière individuelle sous forme de parties de réponses à partir de chacun des deux ou plusieurs systèmes de bases de données, dans lequel les parties de réponses sont cachées dans la première mémoire volatile.

9. Système de communication selon la revendication 8, dans lequel l'un quelconque des éléments suivants est chiffré en utilisant un algorithme de chiffrement avant le stockage dans la première mémoire volatile : les parties de réponse, la réponse à l'interrogation initiale, la réponse à l'interrogation mise à jour, les métadonnées d'interrogation, la permission de certificat pour chacun des deux ou plusieurs systèmes de bases de données, et des combinaisons de ceux-ci.

10. Système de communication selon la revendication 9, dans lequel l'algorithme de chiffrement est conçu pour chiffrer des données dans des blocs de données alternatifs (410, 416, 420, 424), où chacun des blocs de données alternatifs est chiffré dans une séquence prédéterminée avec une clé d'un groupe de clés de chiffrement (402, 404, 1546), où chacune des clés de chiffrement séparée est cachée dans la première mémoire volatile.

11. Système de communication selon la revendication 10, dans lequel l'exécution des premières instructions exécutables par machine fait en sorte que le premier processeur déchiffre les blocs de données alternatifs en utilisant la clé du groupe de clés de chiffrement en conformité avec la séquence prédéterminée.

12. Système de communication selon l'une quelconque des revendications précédentes, dans lequel l'exécution des deuxièmes instructions exécutables par machine fait en outre en sorte que le deuxième processeur termine l'instance de l'application, où l'exécution des deuxièmes instructions exécutables par machine fait en outre que le deuxième processeur envoie un message d'application fermée au premier processeur par le biais de la connexion réseau pendant l'achèvement de l'instance de l'application, où l'exécution des première instructions exécutables par machine fait en outre en sorte que le premier processeur nettoie la première mémoire volatile.

13. Support de stockage lisible par ordinateur (1514) contenant des premières instructions exécutables par machine (1522) pour l'exécution par un premier processeur (1510) d'un premier système informatique (1501), dans lequel le premier système informatique comprend une première mémoire volatile (1512),), où les premières instructions exécutables par machine sont conçues pour mettre en œuvre un système transactionnel de base de données en temps réel, où le système transactionnel de base de données en temps réel est en outre conçu pour se connecter à deux ou plusieurs systèmes de bases de données (308, 310, 312, 314, 1508, 1508', 1508", 1508'"), où le premier système informatique est conçu pour se connecter à une connexion réseau (1506) ;
dans lequel l'exécution des premières instructions exécutables par machine fait en sorte que le premier processeur :
- génère (1704) une interrogation de base de données initiale en utilisant une interrogation de données reçue (1702) à partir du deuxième système informatique par le biais de la connexion réseau ;
- interroge (1706) les deux ou plusieurs systèmes de bases de données en utilisant l'interrogation de base de données initiale ;
- reçoive (1708) une réponse à l'interrogation initiale (1532) à partir des deux ou plusieurs systèmes de bases de données en réponse à l'interrogation de base de données ;
- transforme (1710) la réponse à l'interrogation initiale en donnée d'application (1534, 1534') en utilisant un modèle de mémoire, où le modèle de mémoire est conçu pour formater la donnée d'application sous forme d'une ou de plusieurs pages initiales (1524, 1534') de mémoire, où la ou les pages initiales ont une taille prédéterminée, où la ou les pages initiales comprennent chacune un identifieur ou un code ; et
- pousse (1712) la donnée d'application à travers la connexion réseau dans une deuxième mémoire volatile (1518) du deuxième système informatique.

14. Procédé de communication entre un premier système informatique (1501) et un deuxième système informatique (1502) en utilisant une connexion réseau (1506), où le premier système informatique comprend un premier processeur (1510), où le premier système informatique comprend une première mémoire volatile (1514), où le premier système informatique comprend des premières instructions exécutables par machine (1522) conçues pour mettre en œuvre un système transactionnel de base de données en temps réel, où le système transactionnel de base de données en temps réel est en outre conçu pour se connecter à deux ou plusieurs systèmes de bases de données (308, 310, 312, 314, 1508, 1508', 1508", 1508'"), où le deuxième système informatique comprend un deuxième processeur (1516), où le deuxième système informatique comprend une deuxième mémoire volatile (1518), où le deuxième système informatique comprend des deuxièmes instructions exécutables par machine (1524) pour l'exécution d'une mise en œuvre d'une application (1526) par le deuxième processeur,
où le procédé comprend :
- la génération (1700) d'une interrogation de données (1528) pour des données d'application (1534, 1534') pour une instance de l'application par le deuxième processeur ;
- l'envoi (1702) de l'interrogation de données au premier système informatique par le deuxième système informatique par le biais de la connexion réseau ;
- la génération (1704) d'une interrogation de base de données initiale (1530) en utilisant l'interrogation de données par le premier processeur ;
- l'interrogation (1706) des deux ou plusieurs systèmes de bases de données en utilisant l'interrogation de base de données initiale par le premier processeur ;
- la réception (1708) d'une réponse à l'interrogation initiale (1532) à partir des deux ou plusieurs systèmes de bases de données en réponse à l'interrogation de base de données par le premier processeur ;
- la transformation (1710) de la réponse à l'interrogation initiale en donnée d'application en utilisant un modèle de mémoire, où le modèle de mémoire est conçu pour formater la donnée d'application sous forme d'une ou de plusieurs pages initiales (1524, 1534') de mémoire, par le premier processeur, où la ou les pages initiales ont une taille prédéterminée, où la ou les pages initiales comprennent chacune un identifieur ou un code ;
- la poussée (1712) de la donnée d'application à travers la connexion réseau par le premier processeur ; et
- l'échange (1714) de la donnée d'application dans la deuxième mémoire volatile par le deuxième processeur afin de remplacer des pages existantes de mémoire, où le deuxième processeur est conçu pour sélectionner les pages de mémoire existantes à remplacer en utilisant l'identifieur ou le code de la ou des pages initiales.
